# EUROPEAN PATENT APPLICATION

(11) **EP 2 662 249 A1**
(43) Date of publication of application: **13.11.2013**
(21) Application number: 12732504.1
(22) Date of filing: 06.01.2012
(51) Int. Cl.: B60R 21/264, B01J 7/00

(54) **GAS GENERATOR**

(30) Priority: 07.01.2011 JP 2011001939
(71) Applicant: Nippon Kayaku Kabushiki Kaisha, Tokyo 102-8172 (JP); Advanced Technology & Solution Co., Ltd., GyeongSangNam-Do (KR)
(72) Inventor: OHSUGI, Satoshi, Himeji-shi Hyogo 679-2123 (JP); TANAKA, Yusuke, Himeji-shi Hyogo 679-2123 (JP); MUKUNOKI, Hirotaka, Himeji-shi Hyogo 679-2123 (JP); KIM, Jin Han, GimHae-Si, GyeongSangNam-Do (KR)
(74) Representative: TBK
(86) International application number: PCT/JP2012/050176
(87) International publication number: WO 2012/093720

(57) **Abstract**

A gas generator (1A) includes a lower shell (10), an upper shell (2), a holding portion (30), an igniter (40), and a filter (70). The lower shell (10) is made of a press-formed product formed by press-working one plate-shaped member made of metal, and includes a protruding cylindrical portion (13) and an opening (15) provided in the protruding cylindrical portion (13). The holding portion (13) is formed from a resin-molded portion formed by attaching an insulating fluid resin material to a bottom plate portion (11) so as to reach a part of an outer surface from a part of an inner surface of the bottom plate portion (11) of the lower shell (10) through the opening (15) and solidifying the same, and includes an accommodation recess portion (35) in a portion opposed to a top plate portion (21). The igniter (40) is held by the holding portion (30) while it is inserted in the accommodation recess portion (30) from a side of the top plate portion (21) and fitted therein.

## Description

### TECHNICAL FIELD

The present invention relates to a gas generator incorporated in a passenger protection apparatus, and more particularly to what is called a disc type gas generator incorporated in an air bag apparatus equipped in a steering wheel or the like of a car.

### BACKGROUND ART

From a point of view of protection of a driver and/or a passenger in a car or the like, an air bag apparatus which is a passenger protection apparatus has conventionally widely been used. The air bag apparatus is equipped for the purpose of protecting a driver and/or a passenger against shock caused at the time of collision of a vehicle or the like, and it receives a body of a driver or a passenger with an air bag serving as a cushion, as the air bag is expanded and developed instantaneously at the time of collision of the vehicle or the like. The gas generator is equipment which is incorporated in this air bag apparatus, an igniter therein being ignited in response to power feed through a control unit at the time of collision of a vehicle or the like to thereby bum a gas generating agent with flame caused by the igniter and instantaneously generate a large amount of gas, and thus expands and develops an air bag. It is noted that the air bag apparatus is equipped, for example, in a steering wheel, an instrument panel, or the like of a car.

Gas generators of various structures are available, and in particular, what is called a disc type gas generator is available as a gas generator suitably made use of for a driver-seat-side air bag apparatus equipped in a steering wheel or the like. In general, the disc type gas generator has a short cylindrical housing of which axial end portions are closed, a gas discharge opening being provided in a circumferential wall of the housing, and the housing accommodating a gas generating agent, an igniter, a filter, and the like.

The housing of the disc type gas generator is generally constituted of combination of a cylindrical metal member with bottom called a lower shell and a cylindrical metal member with bottom called an upper shell. Of these shells, the lower shell forms at least a bottom plate portion of the housing, to which the igniter is assembled and fixed.

A shape of the upper shell has conventionally relatively been simple, and hence it has generally been fabricated by press-working one plate-shaped member made of metal. In contrast, since a shape of a portion of the lower shell to which the igniter is to be assembled has been complicated, the lower shell has generally been fabricated by cutting that portion (a portion of the lower shell to serve as an igniter fixation portion). Fabrication of the lower shell through such cutting, however, has put significant pressure on manufacturing cost, and hence improvement thereof has been demanded.

Then, an attempt to simplify a construction of the lower shell, fabricate the lower shell by press-working one plate-shaped member made of metal, and fix an igniter to the lower shell fabricated by press-working by means of a resin-molded portion through insert molding has been made. For example, Japanese Patent Laying-Open No. 4-266548 (PTD 1), Japanese National Patent Publication No. 2005-528276 (PTD 2), Japanese National Patent Publication No. 2007-521181 (PTD 3), Japanese Patent Laying-Open No. 2010-173558 (PTD 4), Japanese Patent Laying-Open No. 2010-173559 (PTD 5), Japanese Patent Laying-Open No. 2010-173560 (PTD 6), and the like are exemplified as documents disclosing such a construction.

In the gas generator disclosed in any of the documents above, such a construction that an igniter is assembled to a lower shell formed by press-working one plate-shaped member made of metal through insert molding with a resin material serving as a source material has been adopted. More specifically, an insulating fluid resin material is poured into a space between the lower shell and the igniter arranged in an opening provided in the lower shell and then solidified, to thereby form a resin-molded portion, and the resin molded portion is secured to a surface of the igniter and a surface of the lower shell, so that the igniter is fixed to the lower shell.

### CITATION LIST

### PATENT DOCUMENT

PTD 1: Japanese Patent Laying-Open No. 4-266548
PTD 2: Japanese National Patent Publication No. 2005-528276
PTD 3: Japanese National Patent Publication No. 2007-521181
PTD 4: Japanese Patent Laying-Open No. 2010-173558
PTD 5: Japanese Patent Laying-Open No. 2010-173559
PTD 6: Japanese Patent Laying-Open No. 2010-173560

### SUMMARY OF INVENTION

### TECHNICAL PROBLEM

In a case where the construction as disclosed in any of the documents above is adopted, however, exposure of the igniter to a high-temperature and high-pressure environment during insert molding gives rise to a problem. Namely, since the igniter is a part in which an ignition agent or the like sensitively reactive to static electricity, flame, or the like is loaded, handling thereof requires great care. Exposure of the igniter to the high-temperature and high-pressure environment as above, however, involves considerable difficulty in ensuring safety in assembly operations. Then, the assembly operations are significantly restricted, which has resulted in impediment to easy manufacturing of a gas generator.

Therefore, the present invention was made to solve the problems described above, and an object thereof is to provide a gas generator which can achieve reduced cost, have less restriction in assembly operations, and can safely and readily be manufactured.

### SOLUTION TO PROBLEM

A gas generator based on the present invention includes a housing, an igniter, and a holding portion. The housing is made of a short cylindrical member which is constituted of a top plate portion and a bottom plate portion closing axial end portions and a circumferential wall portion provided with a gas discharge opening and includes therein a combustion chamber accommodating a gas generating agent. The igniter serves for burning the gas generating agent. The holding portion is provided on the bottom plate portion and holds the igniter. The housing at least has a lower shell including the bottom plate portion and an upper shell including the top plate portion, and the lower shell includes a protruding cylindrical portion provided to protrude toward the top plate portion and an opening provided at an axial end portion of the protruding cylindrical portion, which is located on a side of the top plate portion. The holding portion is formed from a resin-molded portion which is formed by attaching a fluid resin material to the bottom plate portion so as to reach a part of an outer surface of the bottom plate portion from a part of an inner surface of the bottom plate portion through the opening and solidifying the fluid resin material so that at least a part of the resin-molded portion is secured to the bottom plate portion, and includes an accommodation recess portion for accommodating the igniter in a portion opposed to the top plate portion. The igniter is held by the holding portion while it is inserted in the accommodation recess portion from a side of the top plate portion and fitted in the accommodation recess portion.

In the gas generator based on the present invention above, preferably, one of the igniter and the holding portion is provided with a locking portion and the other of the igniter and the holding portion is provided with a locked portion, and in that case, preferably, the igniter is held by the holding portion as the locking portion is locked to the locked portion.

In the gas generator based on the present invention above, preferably, the locking portion has a groove portion extending along a circumferential direction, in a portion on a main surface on a side locked to the locked portion, which corresponds to a root of the locking portion.

In the gas generator based on the present invention above, preferably, the igniter may be held by the holding portion by being fixed to the holding portion with an adhesive.

The gas generator based on the present invention above may further include a first rotation prevention mechanism for preventing the igniter from rotating relative to the holding portion.

The gas generator based on the present invention above may further include a second rotation prevention mechanism for preventing the holding portion from rotating relative to the lower shell.

In the gas generator based on the present invention above, preferably, the lower shell is made of a press-formed product formed by press-working one plate-shaped member made of metal.

In the gas generator based on the present invention above, preferably, the igniter includes an agent loaded portion accommodating an agent for burning the gas generating agent and a terminal pin connected to the agent loaded portion for igniting the agent, and in that case, preferably, the terminal pin is arranged to pass through the opening in the lower shell. Moreover, in that case, a size of the opening is preferably smaller than a size of the igniter at a portion of the agent loaded portion largest in outer shape.

In the gas generator based on the present invention above, preferably, the holding portion includes an insertion hole through which the terminal pin is inserted, and preferably, the terminal pin has, in a root portion, a flexion portion formed such that a part thereof juts out. In that case, the insertion hole preferably has a site allowing reception of the flexion portion of the terminal pin in a portion facing the accommodation recess portion, and in addition in that case, the site allowing reception of the flexion portion is preferably provided only at a prescribed position in a circumferential direction around a central axis of the insertion hole.

In the gas generator based on the present invention above, preferably, the holding portion includes a female connector portion capable of receiving a male connector in a portion facing outside, and in that case, the female connector portion is preferably located within the protruding cylindrical portion.

### ADVANTAGEOUS EFFECTS OF INVENTION

According to the present invention, a gas generator which can achieve reduced cost, have less restriction in assembly operations, and can safely and readily be manufactured can be obtained.

### BRIEF DESCRIPTION OF DRAWINGS

Fig. 1 is a schematic diagram of a gas generator in Embodiment 1 of the present invention.
Fig. 2 is a schematic diagram of an area in the vicinity of an igniter of the gas generator in Embodiment 1 of the present invention.
Fig. 3 is a schematic diagram for illustrating a structure for assembly and a procedure for assembly of the igniter of the gas generator in Embodiment 1 of the present invention.
Fig. 4A is a plan view of a holding portion of the gas generator in Embodiment 1 of the present invention.
Fig. 4B is a bottom view of the igniter of the gas generator in Embodiment 1 of the present invention.
Fig. 5 is a schematic diagram of an area in the vicinity of the igniter of the gas generator according to a first variation based on Embodiment 1 of the present invention.
Fig. 6A is a plan view of the holding portion of the gas generator according to a second variation based on Embodiment 1 of the present invention.
Fig. 6B is a bottom view of the igniter of the gas generator according to the second variation based on Embodiment 1 of the present invention.
Fig. 7 is a schematic diagram of a gas generator in Embodiment 2 of the present invention.
Fig. 8A is a plan view of the holding portion of the gas generator in Embodiment 2 of the present invention.
Fig. 8B is a bottom view of the igniter of the gas generator in Embodiment 2 of the present invention.
Fig. 9A is a plan view of the holding portion of a gas generator according to a variation based on Embodiment 2 of the present invention.
Fig. 9B is a bottom view of the igniter of the gas generator according to the variation based on Embodiment 2 of the present invention.
Fig. 10 is a schematic diagram of a gas generator in Embodiment 3 of the present invention.
Fig. 11 is a schematic diagram of a gas generator in Embodiment 4 of the present invention.
Fig. 12 is a schematic diagram of an area in the vicinity of the igniter of the gas generator in Embodiment 4 of the present invention.
Fig. 13 is a schematic diagram for illustrating a structure for assembly and a procedure for assembly of the igniter of the gas generator in Embodiment 4 of the present invention.
Fig. 14 is a schematic diagram for illustrating a structure for assembly and a procedure for assembly of the igniter of the gas generator according to a variation based on Embodiment 4 of the present invention.
Fig. 15 is a schematic diagram of a gas generator in Embodiment 5 of the present invention.
Fig. 16 is a schematic diagram of an area in the vicinity of the igniter of the gas generator in Embodiment 5 of the present invention.
Fig. 17 is a schematic diagram for illustrating a structure for assembly and a procedure for assembly of the igniter of the gas generator in Embodiment 5 of the present invention.
Fig. 18A is a plan view of the holding portion of the gas generator in Embodiment 5 of the present invention.
Fig. 18B is a bottom view of the igniter of the gas generator in Embodiment 5 of the present invention.
Fig. 19 is a diagram showing a state in a case where the igniter has been inserted in an incorrect orientation in the gas generator in Embodiment 5 of the present invention.
Fig. 20 is a schematic diagram of a gas generator according to a first variation based on Embodiment 5 of the present invention.
Fig. 21 is a schematic diagram for illustrating a structure for assembly and a procedure for assembly of the igniter of the gas generator according to the first variation based on Embodiment 5 of the present invention.
Fig. 22 is a diagram showing a state in a case where the igniter has been inserted in an incorrect orientation in the gas generator according to the first variation based on Embodiment 5 of the present invention.
Fig. 23 is a schematic diagram for illustrating a structure for assembly and a procedure for assembly of the igniter of a gas generator according to a second variation based on Embodiment 5 of the present invention.
Fig. 24 is a schematic diagram of a gas generator in Embodiment 6 of the present invention.
Fig. 25 is a schematic diagram of a gas generator in Embodiment 7 of the present invention.
Fig. 26 is an enlarged view of a main portion of a gas generator in Embodiment 8 of the present invention.

### DESCRIPTION OF EMBODIMENTS

An embodiment of the present invention will be described hereinafter in detail with reference to the drawings. An embodiment and a variation thereof shown below represent application of the present invention to a disc type gas generator incorporated in an air bag apparatus equipped in a steering wheel or the like of a car. It is noted that the same or common elements in the embodiment and the variation thereof shown below have the same reference characters allotted in the drawings and description thereof will not be repeated.

### (Embodiment 1)

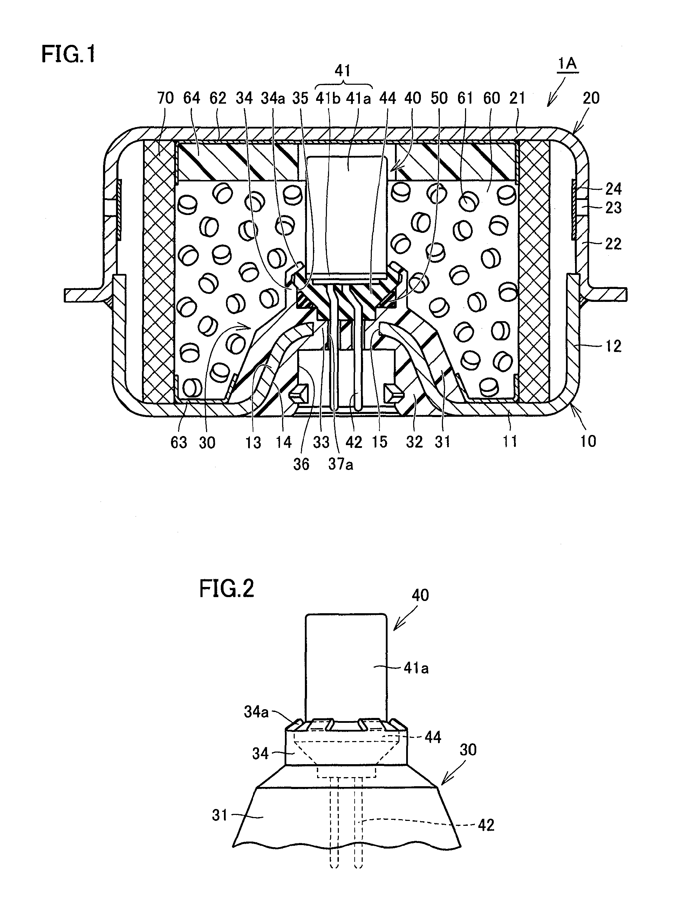

Fig. 1 is a schematic diagram of a gas generator in Embodiment 1 of the present invention. An overall structure of a gas generator 1A in the present embodiment will initially be described with reference to this Fig. 1.

As shown in Fig. 1, gas generator 1A in the present embodiment has a short cylindrical housing having opposing axial ends closed, and is constructed to accommodate as components in this housing, a holding portion 30, an igniter 40, a gas generating agent 61, a filter 70, and the like. The short cylindrical housing includes a lower shell 10 and an upper shell 20. Each of lower shell 10 and upper shell 20 is made of a press-formed product formed by press-working one plate-shaped member made of metal.

Lower shell 10 and upper shell 20 are each formed in a cylindrical shape with bottom, and an outer shell portion of the housing is formed by combining and joining the shells such that open surfaces thereof face each other. Lower shell 10 has a bottom plate portion 11 and a circumferential wall portion 12 and upper shell 20 has a top plate portion 21 and a circumferential wall portion 22. It is noted that electron-beam welding, laser welding, friction welding, or the like is suitably made use of for joining lower shell 10 and upper shell 20 to each other.

A protruding cylindrical portion 13 protruding toward top plate portion 21 is provided in a substantially central portion of bottom plate portion 11 of lower shell 10, so that a depression portion 14 is formed in the substantially central portion of bottom plate portion 11 of lower shell 10. Protruding cylindrical portion 13 is a site to which igniter 40 is fixed with holding portion 30 being interposed, and depression portion 14 is a site serving as a space for providing a female connector portion 36 in holding portion 30. Here, protruding cylindrical portion 13 is formed to be in a cylindrical shape with bottom, and tapered such that an outer diameter thereof decreases toward top plate portion 21. In addition, an opening 15 in a circular shape when viewed two-dimensionally is provided at an axial end portion of protruding cylindrical portion 13, which is located on a side of top plate portion 21. Opening 15 is a site through which a pair of terminal pins 42 of igniter 40 is inserted.

As described above, lower shell 10 is fabricated by press-working one plate-shaped member made of metal. Specifically, lower shell 10 is fabricated by using a pair of molds consisting of an upper mold and a lower mold to press one plate-shaped member made of metal in a vertical direction to thereby form the plate-shaped member in a shape as illustrated.

Here, for example, a metal plate composed of stainless steel, iron steel, an aluminum alloy, a stainless alloy, or the like and having a thickness before pressing approximately not smaller than 1.5 mm and not greater than 3.0 mm is made use of as the plate-shaped member made of metal, and suitably, what is called a high tensile steel plate which is free from such breakage as fracture even at the time of application of tensile stress not lower than 440 MPa and not higher than 780 MPa is suitably made use of. It is noted that, regarding a thickness after pressing, a thickness of a smallest thickness portion is preferably not smaller than approximately 1.0 mm. In addition, press-working may be carried out through hot forging or cold forging, and from a point of view of improvement in dimension accuracy, it is more suitably carried out through cold forging.

As described above, upper shell 20 is fabricated by press-working one plate-shaped member made of metal. Specifically, upper shell 20 is fabricated by using a pair of molds consisting of an upper mold and a lower mold to press one plate-shaped member made of metal in a vertical direction to thereby form the plate-shaped member in a shape as illustrated. Here, a metal plate composed of stainless steel, iron steel, an aluminum alloy, a stainless alloy, or the like can be made use of as the plate-shaped member made of metal.

Holding portion 30 is provided around protruding cylindrical portion 13 provided in the substantially central portion of bottom plate portion 11 of lower shell 10. Holding portion 30 has an inner coating portion 31 covering a part of an inner surface of bottom plate portion 11 of lower shell 10, an outer coating portion 32 covering a part of an outer surface of bottom plate portion 11 of lower shell 10, and a coupling portion 33 located within opening 15 provided in bottom plate portion 11 of lower shell 10 and continuing to each of inner coating portion 31 and outer coating portion 32.

This holding portion 30 is formed from a resin-molded portion formed by attaching an insulating fluid resin material to bottom plate portion 11 so as to reach a part of the outer surface of bottom plate portion 11 from a part of the inner surface thereof through opening 15 provided in bottom plate portion 11 of lower shell 10 and solidifying the fluid resin material. Namely, holding portion 30 is formed by injection molding with the use of a mold (more particularly, outsert molding).

For a source material for holding portion 30 formed by injection molding, a resin material excellent in heat resistance, durability, corrosion resistance, and the like after curing is suitably selected and made use of. In that case, without being limited to a thermosetting resin represented by an epoxy resin and the like, a thermoplastic resin represented by a polybutylene terephthalate resin, a polyethylene terephthalate resin, a polyamide resin (such as nylon 6 or nylon 66), a polypropylene sulfide resin, a polypropylene oxide resin, and the like can also be made use of. In a case where these thermoplastic resins are selected as a source material, in order to ensure mechanical strength of holding portion 30 after molding, glass fibers or the like are preferably contained as fillers in these resin materials. In a case where sufficient mechanical strength can be ensured only by a thermoplastic resin, however, a filler as described above does not have to be added.

Holding portion 30 is secured to bottom plate portion 11 at a surface on a side of bottom plate portion 11, of each of inner coating portion 31, outer coating portion 32, and coupling portion 33 described above. Here, holding portion 30 is provided to entirely cover protruding cylindrical portion 13 provided in bottom plate portion 11 of lower shell 10, so that protruding cylindrical portion 13 is completely buried in holding portion 30.

In a portion of inner coating portion 31 of holding portion 30, which is opposed to top plate portion 21, a holding wall portion 34 having an annular shape is erected toward top plate portion 21, so that an accommodation recess portion 35 is provided in holding portion 30. Accommodation recess portion 35 is a site for receiving and accommodating a part of igniter 40.

In a portion of outer coating portion 32 of holding portion 30, which faces the outside, female connector portion 36 is formed. This female connector portion 36 is a site for receiving a male connector (not shown) of a harness for connecting igniter 40 and a control unit (not shown) to each other, and it is located in depression portion 14 provided in bottom plate portion 11 of lower shell 10. In this female connector portion 36, a portion of terminal pin 42 of igniter 40 closer to a lower end is arranged as being exposed. The male connector is inserted in female connector portion 36, so that electrical conduction between a core wire of the harness and terminal pin 42 is established.

A pair of insertion holes 37a in a perfect circle shape when viewed two-dimensionally is provided in coupling portion 33 of holding portion 30. This pair of insertion holes 37a is a site through which a pair of terminal pins 42 of igniter 40 is inserted, and opposing ends thereof reach accommodation recess portion 35 and female connector portion 36 described above, respectively.

Igniter 40 is an ignition device producing flame and thermal particles for burning gas generating agent 61 and assembled to holding portion 30 as a part thereof is accommodated in accommodation recess portion 35 described above. Igniter 40 includes an agent loaded portion 41 in which an agent generating flame and thermal particles as it bums is loaded and a pair of terminal pins 42 connected to agent loaded portion 41. Igniters having various constructions can be made use of as igniter 40, however, here, an igniter of a type in which an ignition agent and an enhancer agent are loaded in agent loaded portion 41 is made use of. It is noted that details of a structure for assembly of igniter 40 to holding portion 30 will be described later.

Agent loaded portion 41 contains an ignition agent generating flame as it is ignited and bums at the time of actuation, a resistor for igniting this ignition agent, and an enhancer agent producing a large number of thermal particles as it is ignited by the flame caused by burning of the ignition agent and it burns. The pair of terminal pins 42 is connected to agent loaded portion 41 for igniting the ignition agent.

More specifically, igniter 40 includes an igniter cup 41a made of a cup-shaped member, a base portion 41 b which closes an opening end of igniter cup 41a and holds the pair of terminal pins 42 as the pins are inserted therethrough, and a lower cover 44 provided to cover a part of terminal pin 42 and base portion 41 b, and has such a construction that the resistor (bridge wire) is attached to couple tip ends of the pair of terminal pins 42 inserted in igniter cup 41a to each other, the ignition agent is loaded into igniter cup 41 a so as to surround or be proximate to this resistor, and the enhancer agent is loaded to be in contact with the ignition agent.

Here, a Nichrome wire or the like is generally made use of as a resistor, and ZPP (zirconium potassium perchlorate), ZWPP (zirconium tungsten potassium perchlorate), lead tricinate, or the like is generally made use of as the ignition agent. In addition, the enhancer agent should be able to reliably start burning gas generating agent 61 which will be described later, and generally, a composition or the like composed of metal powders/oxidizing agent represented by B/KNO₃ or the like is employed. For the enhancer agent, a powdery enhancer agent, an enhancer agent formed in a prescribed shape by a binder, or the like is made use of. A shape of the enhancer agent formed by a binder includes, for example, various shapes such as a granule, a column, a sheet, a sphere, a cylinder with a single hole, a cylinder with multiple holes, a tablet, and the like. It is noted that igniter cup 41 a and base portion 41b are generally made of metal or plastic, and lower cover 44 is generally made of plastic.

Upon sensing collision, a prescribed amount of current flows in a resistor through terminal pin 42. As the prescribed amount of current flows in the resistor, Joule heat is generated in the resistor and the ignition agent starts burning. Flame at a high temperature caused by burning bums the enhancer agent and produces a large number of thermal particles. As the enhancer agent bums, a pressure and a temperature within igniter cup 41a increase, igniter cup 41a bursts or melts, and the thermal particles are released to the outside of igniter 40.

A sealing member 50 is interposed between igniter 40 and holding portion 30. More specifically, sealing member 50 is arranged between a bottom surface and an inner circumferential surface of accommodation recess portion 35 of holding portion 30 and an outer circumferential surface of lower cover 44 of igniter 40. Sealing member 50 serves to hermetically seal a combustion chamber 60 which will be described later by air tightly sealing a gap created between igniter 40 and holding portion 30, and it is inserted in the gap during assembly of igniter 40 to holding portion 30.

A sealing member made of a material having sufficient heat resistance and durability is preferably made use of as sealing member 50, and for example, an O ring or the like made of an EPDM resin representing one type of ethylene propylene rubber is suitably made use of. It is noted that hermeticity of combustion chamber 60 can further be enhanced by separately applying a liquid sealing agent to a portion where sealing member 50 is to be interposed. Here, a liquid sealing agent containing a resin material excellent in heat resistance, durability, corrosion resistance, and the like after curing is suitably selected and made use of as the liquid sealing agent, and for example, a cyanoacrylate-based resin or a silicone-based resin is particularly suitably made use of as the resin material. In addition, for the resin material, other than the resin materials described above, a phenol-based resin, an epoxy-based resin, a melamine-based resin, a urea-based resin, a polyester-based resin, an alkyd-based resin, a polyurethane-based resin, a polyimide-based resin, a polyethylene-based resin, a polypropylene-based resin, a polyvinyl chloride-based resin, a polystyrene-based resin, a polyvinyl acetate-based resin, a polytetrafluoroethylene-based resin, an acrylonitrile butadiene styrene-based resin, an acrylonitrile styrene-based resin, an acryl-based resin, a polyamide-based resin, a polyacetal-based resin, a polycarbonate-based resin, a polyphenylene ether-based resin, a polybutylene terephthalate-based resin, a polyethylene terephthalate-based resin, a polyolefin-based resin, a polyphenylene sulfide-based resin, a polysulfone-based resin, a polyether sulfone-based resin, a polyarylate-based resin, a polyether ether ketone-based resin, a polyamide imide-based resin, a liquid crystal polymer, and the like can be made use of.

Combustion chamber 60 accommodating gas generating agent 61 is located in a space surrounding a portion where holding portion 30 and igniter 40 described above are arranged, in the space inside the housing constituted of lower shell 10 and upper shell 20. More specifically, holding portion 30 and igniter 40 described above are arranged to protrude from bottom plate portion 11 of lower shell 10 toward the inside of the housing, and a space provided in a portion facing these holding portion 30 and igniter 40 is formed as combustion chamber 60.

In addition, in a space surrounding combustion chamber 60 in a radial direction of the housing, a filter 70 is arranged along an inner circumference of the housing. Filter 70 has a hollow cylindrical shape, and a central axis thereof is arranged to substantially match with the axial direction of the housing.

Gas generating agent 61 is an agent which is ignited by thermal particles generated as a result of actuation of igniter 40 and produces a gas as it bums. A non-azide-based gas generating agent is preferably employed as gas generating agent 61, and gas generating agent 61 is formed as a molding generally containing a fuel, an oxidizing agent, and an additive. For the fuel, for example, a triazole derivative, a tetrazole derivative, a guanidine derivative, an azodicarbonamide derivative, a hydrazine derivative, or the like, or combination thereof is made use of. Specifically, for example, nitroguanidine, guanidine nitrate, cyanoguanidine, 5-aminotetrazole, and the like are suitably made use of. In addition, as the oxidizing agent, for example, basic nitrate such as basic copper nitrate, perchlorate such as ammonium perchlorate or potassium perchlorate, nitrate containing cations selected from an alkali metal, an alkali earth metal, a transition metal, and ammonia, or the like is made use of. As the nitrate, for example, sodium nitrate, potassium nitrate, or the like is suitably made use of. Moreover, as the additive, a binder, a slag formation agent, a combustion modifier, or the like is exemplified. As the binder, for example, metal salt of carboxymethyl cellulose, an organic binder such as stearate, or an inorganic binder such as synthetic hydrotalcite and Japanese acid clay can suitably be made use of. As the slag formation agent, silicon nitride, silica, Japanese acid clay, or the like can suitably be made use of. In addition, as the combustion modifier, a metal oxide, ferrosilicon, activated carbon, graphite, or the like can suitably be made use of.

A shape of a molding of gas generating agent 61 includes various shapes such as a particulate shape including a granule, a pellet, and a column, and a disc shape. In addition, among columnar moldings, a molding with holes having holes in the molding (such as a cylindrical shape with a single hole or a cylindrical shape with multiple holes) is also made use of. These shapes are preferably selected as appropriate depending on specifications of an air bag apparatus in which gas generator 1A is incorporated, and for example, a shape optimal for the specifications is preferably selected by selecting a shape allowing change over time of a rate of generation of a gas during burning of gas generating agent 61. Furthermore, in addition to a shape of gas generating agent 61, a size of a molding or an amount thereof for filling is preferably selected as appropriate, in consideration of a linear burning velocity, a pressure exponent, or the like of gas generating agent 61.

For example, a filter obtained by winding and sintering a metal wire rod of stainless steel or iron steel, a filter formed by press-working a mesh material into which metal wire rods are knitted to thereby pack the same, a filter obtained by winding a perforated metal plate, or the like is made use of as filter 70. Here, as the mesh material, specifically, a wire gauze of stocking stitch, a plain-woven wire gauze, an aggregate of crimped metal wire rods, or the like is made use of. In addition, as the perforated metal plate, for example, expanded metal obtained by making staggered cuts in a metal plate and forming holes by widening the cuts to thereby work the metal plate in a mesh, hook metal obtained by perforating a metal plate and collapsing burrs caused around a periphery of the hole for flattening, or the like is made use of. In this case, a size or a shape of a hole to be formed can be changed as appropriate as required, and holes different in size or shape may be included in the same metal plate. It is noted that, for example, a steel plate (mild steel) or a stainless steel plate can suitably be made use of as a metal plate, and a nonferrous metal plate of aluminum, copper, titanium, nickel, or an alloy thereof, or the like can also be made use of.

Filter 70 functions as cooling means for cooling a gas by depriving heat at a high temperature of the gas when the gas produced in combustion chamber 60 passes through this filter 70 and also functions as removal means for removing residues (slag) or the like contained in the gas. Therefore, in order to sufficiently cool the gas and to avoid emission of the residue to the outside, the gas produced in combustion chamber 60 should be caused to reliably pass through filter 70.

A plurality of gas discharge openings 23 are provided in circumferential wall portion 22 of upper shell 20 in a portion facing filter 70. This gas discharge opening 23 serves for guiding a gas which has passed through filter 70 to the outside of the housing. To a main surface of circumferential wall portion 22 of upper shell 20, which is located on a side of filter 70, a sealing member 24 is attached to close gas discharge opening 23. An aluminum foil or the like having an adhesive member applied to its one surface is made use of as this sealing member 24. Thus, hermeticity of combustion chamber 60 is ensured.

In the space inside the housing, an upper-side supporting member 62 for fixing an upper end of filter 70 to the housing is arranged at an end portion of upper shell 20 on the side of top plate portion 21. Upper-side supporting member 62 has a site abutting to top plate portion 21 of upper shell 20 and a site abutting to an inner circumferential surface of an upper end portion of filter 70.

In this upper-side supporting member 62, a cushion material 64 is arranged to be in contact with gas generating agent 61 accommodated in combustion chamber 60. This cushion material 64 is provided for the purpose of preventing gas generating agent 61 made of a molding from being crushed by vibration or the like, and a molding of ceramics fibers or a foamed resin (such as foamed silicone) is suitably made use of.

On the other hand, at an end portion of lower shell 10 on the side of bottom plate portion 11 in the space inside the housing, a lower-side supporting member 63 for fixing a lower end of filter 70 to the housing is arranged. Lower-side supporting member 63 has a site abutting to an inner bottom surface of bottom plate portion 11 of lower shell 10 and a site abutting to an inner circumferential surface of a lower end portion of filter 70.

These upper-side supporting member 62 and lower-side supporting member 63 are formed, for example, by press-working or the like a plate-shaped member made of metal, and a steel plate of common steel, special steel, or the like (such as a cold rolled steel plate or a stainless steel plate) is suitably employed. Since upper-side supporting member 62 and lower-side supporting member 63 are formed by folding a part of the plate-shaped member made of metal as described above, upper-side supporting member 62 and lower-side supporting member 63 each have moderate elasticity. Therefore, upper-side supporting member 62 and lower-side supporting member 63 are in contact with the inner circumferential surface of filter 70, so that filter 70 is held and fixed to the housing. In addition, each of upper-side supporting member 62 and lower-side supporting member 63 also has a function to prevent a gas from flowing out through a gap between the upper end of filter 70 and top plate portion 21 of upper shell 20 and a gap between the lower end of filter 70 and bottom plate portion 11 of lower shell 10.

An operation of gas generator 1A in the present embodiment will now be described with reference to Fig. 1.

When a vehicle on which gas generator 1A in the present embodiment is mounted collides, collision sensing means separately provided in the vehicle senses collision, and based thereon, igniter 40 is actuated in response to power feed through a control unit separately provided in the vehicle. As igniter 40 is actuated, the ignition agent and the enhancer agent loaded in agent loaded portion 41 of igniter 40 bum and igniter cup 41a bursts or melts, so that a large number of thermal particles flow into combustion chamber 60.

The thermal particles which have flowed in ignite and bum gas generating agent 61 accommodated in combustion chamber 60 and a large amount of gas is produced. The gas produced in combustion chamber 60 passes through filter 70. At that time, heat is deprived of the gas through filter 70 and the gas is cooled, slag contained in the gas is removed by filter 70, and the gas flows into an outer peripheral portion of the housing.

As an internal pressure in the housing increases, sealing by sealing member 24 which has closed gas discharge opening 23 of upper shell 20 is broken, and the gas is discharged to the outside of the housing through gas discharge opening 23. The discharged gas is introduced in the air bag provided adjacent to gas generator 1A and it expands and develops the air bag.

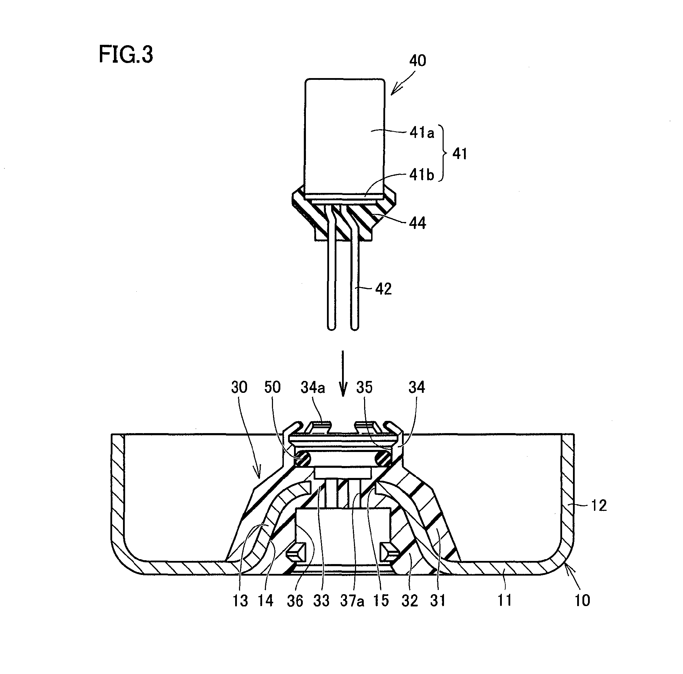

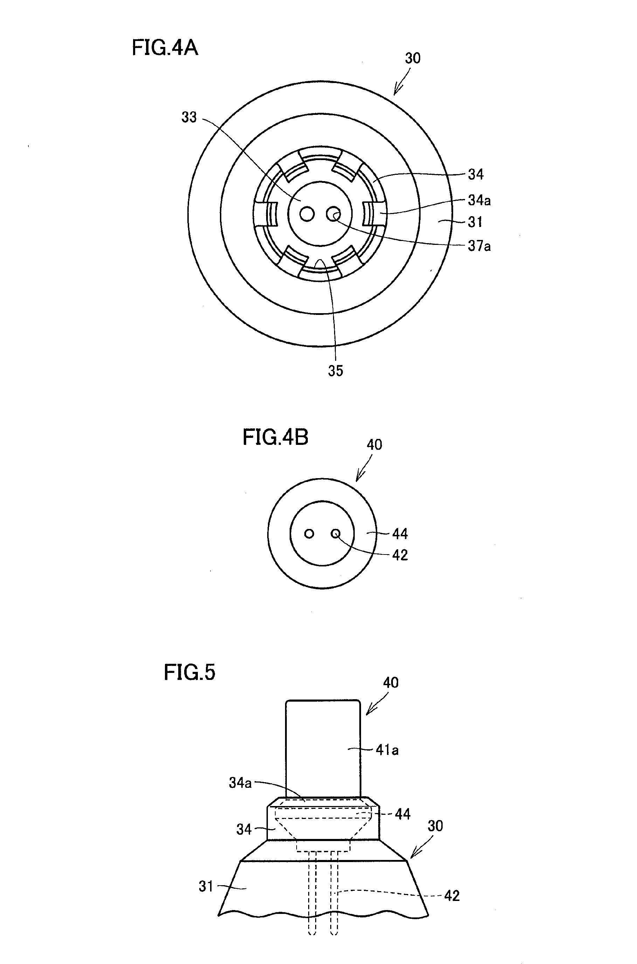

Fig. 2 is a schematic diagram of an area in the vicinity of the igniter of the gas generator in the present embodiment. Fig. 3 is a schematic diagram for illustrating a structure for assembly and a procedure for assembly of the igniter of the gas generator in the present embodiment. In addition, Fig. 4A is a plan view of the holding portion of the gas generator in the present embodiment, and Fig. 4B is a bottom view of the igniter. A structure for assembly, a procedure for assembly, and the like of igniter 40 of gas generator 1A in the present embodiment will be described in detail with reference to these Figs. 2, 3, 4A, and 4B, in addition to Fig. 1 described above.

As shown in Figs. 1 and 2, in gas generator 1A in the present embodiment, lower cover 44 which is a part of igniter 40 is held by holding portion 30 while it is fitted in accommodation recess portion 35 provided in holding portion 30.

Specifically, as shown in Figs. 2 and 3, holding wall portion 34 having an annular shape defining accommodation recess portion 35 of holding portion 30 has a plurality of locking pawl portions 34a provided to align along a circumferential direction at an end portion thereof on the side of top plate portion 21, and locking pawl portions 34a are all formed such that their tip ends face inward. The plurality of locking pawl portions 34a are sites corresponding to a locking portion for fixing igniter 40 to holding portion 30, which are integrally provided simultaneously with other sites of holding portion 30 at the time of injection molding of holding portion 30. Therefore, the plurality of locking pawl portions 34a are all elastically deformable, and holding wall portion 34 itself is elastically deformable.

On the other hand, as shown in Figs. 1 to 3, lower cover 44 of igniter 40 has a site of which outer shape is formed to be greater than agent loaded portion 41 (that is, a site extending radially outward), and the site corresponds to the locked portion for fixing igniter 40 to holding portion 30. The site extends annularly along a circumferential direction, and includes inclined upper surface and lower surface and a circumferential surface continuing to these upper surface and lower surface.

In assembly, as shown in Fig. 3, while holding portion 30 formed from the resin-molded portion is formed in advance through injection molding in bottom plate portion 11 of lower shell 10 and sealing member 50 is accommodated within accommodation recess portion 35 of holding portion 30, igniter 40 is inserted into accommodation recess portion 35 from above (that is, the side of top plate portion 21 after assembly). Here, a pair of terminal pins 42 of igniter 40 is inserted in a pair of insertion holes 37a provided in coupling portion 33 of holding portion 30.

Here, locking pawl portions 34a of holding portion 30 come in contact with the inclined lower surface of lower cover 44 of igniter 40. As described above, however, since locking pawl portions 34a and holding wall portion 34 are elastically deformable, locking pawl portions 34a and holding wall portion 34 retract radially outward, so that lower cover 44 of igniter 40 can be inserted in accommodation recess portion 35.

Then, after igniter 40 is inserted in holding portion 30, locking pawl portions 34a go beyond a side portion of lower cover 44 so that locking pawl portions 34a and holding wall portion 34 return to their original shapes and locking pawl portions 34a are locked to the inclined upper surface of lower cover 44 described above. Thus, igniter 40 is fitted in accommodation recess portion 35 while lower cover 44 thereof is accommodated in accommodation recess portion 35 of holding portion 30, and thus igniter 40 is held by holding portion 30.

It is noted that, as shown in Figs. 4A and 4B, since coupling portion 33 of holding portion 30 is provided with a pair of insertion holes 37a in a shape corresponding to a pair of terminal pins 42 of igniter 40, positioning of igniter 40 with respect to holding portion 30 can readily be achieved by inserting the pair of terminal pins 42 in the pair of insertion holes 37a during assembly of igniter 40 to holding portion 30 described above and igniter 40 can be prevented from rotating relative to holding portion 30 after assembly. Therefore, the pair of insertion holes 37a themselves provided in coupling portion 33 corresponds to the first rotation prevention mechanism.

As described above, since gas generator 1A in the present embodiment is constructed such that igniter 40 is assembled, separately by fitting, to holding portion 30 which is the resin-molded portion formed in advance through injection molding, igniter 40 is not insert-molded at the time of injection molding of holding portion 30. Therefore, igniter 40 which is a part in which an ignition agent or the like sensitively reactive to static electricity, flame, or the like is loaded is not exposed to a high-temperature and high-pressure environment during assembly and safety during the assembly operations can be ensured. Therefore, restrictions imposed during the assembly operations are significantly lessened; for example, a place where an operation for injection molding is to be performed is not restricted.

On the other hand, since assembly of igniter 40 to holding portion 30 can be realized through an operation only for inserting igniter 40 in holding portion 30, assembly can very readily be achieved. In addition, since holding portion 30 holding igniter 40 is formed through injection molding, a specific shape thereof can variously be changed by changing a shape of a mold and a structure of a locking portion for locking igniter 40 can readily be changed to a structure suited to a shape of igniter 40. Therefore, depending on a shape of igniter 40 to be used, any shape of holding portion 30 allowing easier assembly can be selected and thus a degree of freedom in design can highly be ensured.

In addition, since holding portion 30 for fixing igniter 40 to lower shell 10 is formed by injection molding, holding portion 30 is in a state secured to lower shell 10 and sealability at that portion can sufficiently be ensured. Namely, as described above, as inner coating portion 31, outer coating portion 32, and coupling portion 33 constitute holding portion 30, a moderately long margin for securing between lower shell 10 and holding portion 30 can be ensured. Therefore, occurrence of peel-off at an interface portion between lower shell 10 and holding portion 30 can be prevented and sealability can reliably be maintained for a long period of time.

Furthermore, since holding portion 30 for fixing igniter 40 to lower shell 10 is formed by injection molding, an effect of lighter weight of the holding portion, an effect of being free from burr caused in the case of cutting, ensured reproducibility of a shape of the holding portion, and less likeliness of variation in performance, as well as an effect of ability to prevent dielectric breakdown due to occurrence of burr can also be obtained, as compared with a case where the holding portion is formed by cutting lower shell 10.

It is noted that gas generator 1A in the present embodiment described above is constructed such that a size of opening 15 provided in protruding cylindrical portion 13 of lower shell 10 is made smaller than a size of base portion 41b corresponding to a size of igniter 40 at a portion largest in outer shape of agent loaded portion 41. With the construction as such, if unexpected breakage should occur in holding portion 30, igniter 40 could be prevented from passing through opening 15 and jumping out of the housing due to increase in internal pressure in combustion chamber 60, and a safe operation of gas generator 1A would be ensured.

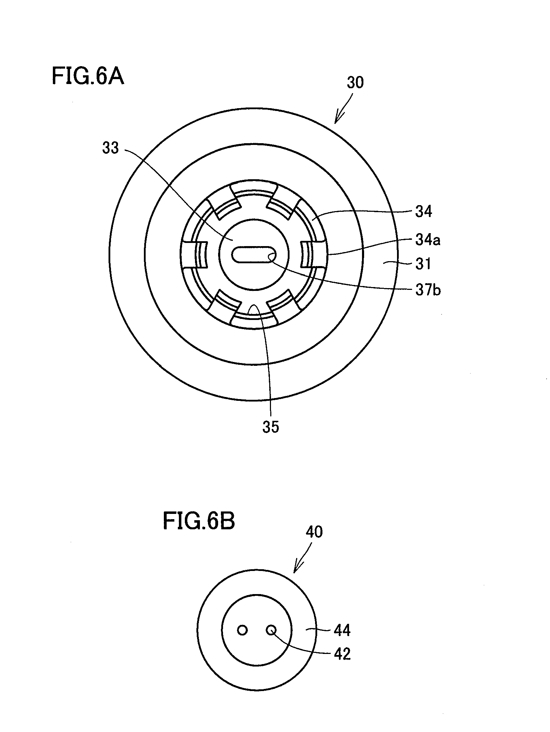

Fig. 5 is a schematic diagram of an area in the vicinity of the igniter of the gas generator according to a first variation based on the present embodiment described above. In addition, Fig. 6A is a plan view of the holding portion of the gas generator according to a second variation based on the present embodiment described above, and Fig. 6B is a bottom view of the igniter. A construction of the gas generator according to the first and second variations based on the present embodiment will now be described with reference to these Figs. 5, 6A, and 6B.

As shown in Fig. 5, the gas generator according to the first variation is different from gas generator 1A in the present embodiment described above in a shape of locking pawl portion 34a serving as the locking portion provided in holding portion 30. Specifically, gas generator 1A in the present embodiment described above has adopted such a construction that a plurality of locking pawl portions 34a are provided in holding wall portion 34 provided in inner coating portion 31 of holding portion 30, however, in the gas generator according to the present first variation, locking pawl portion 34a is formed integrally so as to annularly continuously extend along the circumferential direction.

With the construction as such, locking pawl portion 34a and holding wall portion 34 elastically deform, so that igniter 40 can be inserted in accommodation recess portion 35 of holding portion 30 and igniter 40 can be held by holding portion 30 in a stable manner after insertion.

On the other hand, as shown in Figs. 6A and 6B, the gas generator according to the second variation is different from gas generator 1A in the present embodiment described above in a shape of insertion hole 37a serving as the first rotation prevention mechanism provided in coupling portion 33 of holding portion 30. Specifically, in gas generator 1A in the present embodiment described above, insertion hole 37a provided in coupling portion 33 of holding portion 30 is formed from a pair of holes in a perfect circle shape when viewed two-dimensionally in correspondence with a pair of terminal pins 42 of igniter 40, however, in the gas generator according to the present second variation, an insertion hole 37b is formed from a single hole in an oblong shape when viewed two-dimensionally in correspondence with a pair of terminal pins 42 of igniter 40.

In a case of such a construction as well, by inserting a pair of terminal pins 42 in single insertion hole 37b, positioning of igniter 40 with respect to holding portion 30 can readily be achieved and igniter 40 can be prevented from rotating relative to holding portion 30 after assembly.

### (Embodiment 2)

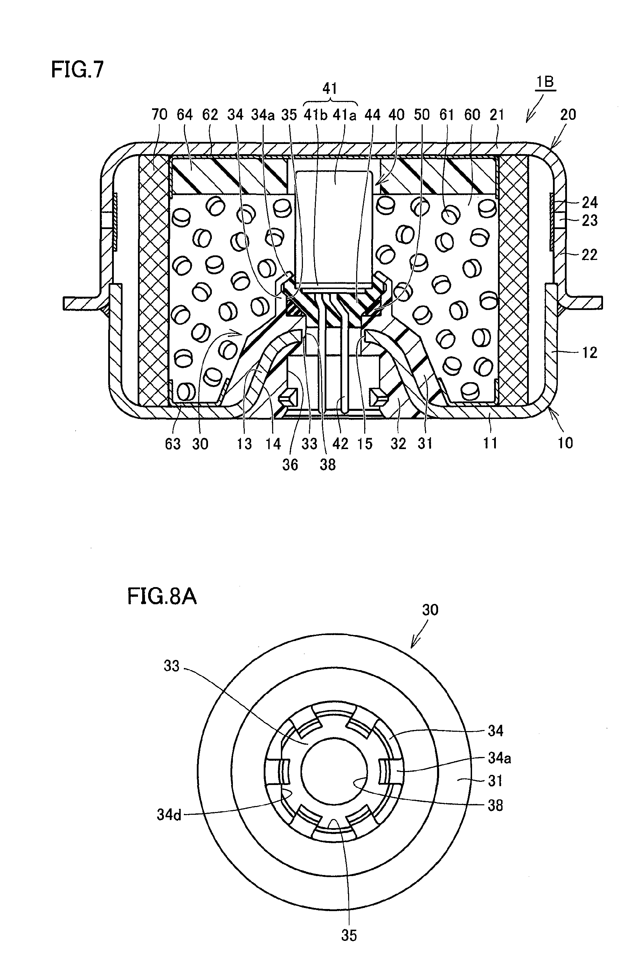

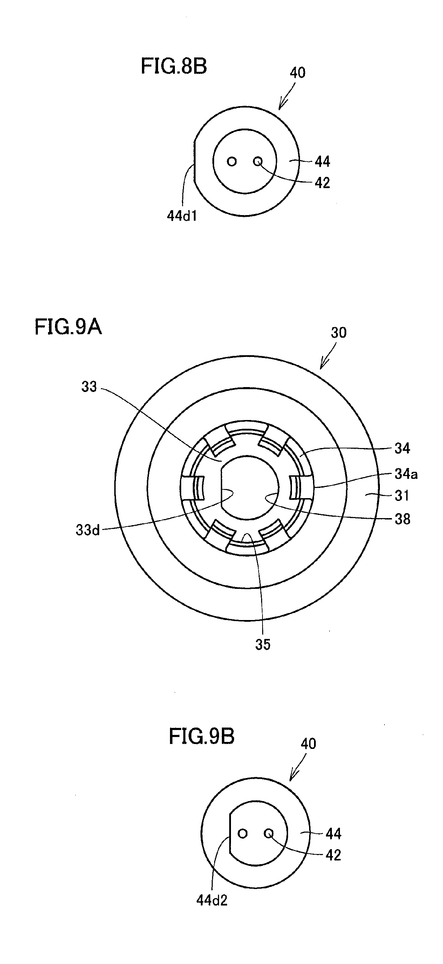

Fig. 7 is a schematic diagram of a gas generator in Embodiment 2 of the present invention. In addition, Fig. 8A is a plan view of the holding portion of the gas generator in the present embodiment, and Fig. 8B is a bottom view of the igniter. A construction of a gas generator 1 B in the present embodiment will be described below with reference to these Figs. 7, 8A, and 8B.

As shown in Fig. 7, gas generator 1 B in the present embodiment is different from gas generator 1A in Embodiment 1 of the present invention described above in a shape of coupling portion 33 of holding portion 30. Specifically, in gas generator 1B in the present embodiment, an insertion hole 38 provided in coupling portion 33 is not in a shape corresponding to a shape of a pair of terminal pins 42 of igniter 40 but it is formed from a single hole in a larger perfect circle shape when viewed two-dimensionally. Therefore, insertion hole 38 does not have a function as the first rotation prevention mechanism.

On the other hand, as shown in Figs. 8A and 8B, in gas generator 1B in the present embodiment, a part of a circumferential surface of an overhang portion of lower cover 44 of igniter 40 is formed from a flat surface 44d1 and a part of the inner circumferential surface of holding wall portion 34 defining accommodation recess portion 35 of holding portion 30 accommodating igniter 40 is formed from a flat surface 34d in a shape corresponding to flat surface 44d1. Namely, flat surface 34d provided in holding wall portion 34 corresponds to the first rotation prevention mechanism.

Therefore, in the case of gas generator 1 B in the present embodiment as well, by inserting igniter 40 in holding portion 30 such that flat surface 44d1 provided in igniter 40 and flat surface 34d provided in holding portion 30 meet each other, positioning of igniter 40 with respect to holding portion 30 can readily be achieved and igniter 40 can be prevented from rotating relative to holding portion 30 after assembly.

Fig. 9A is a plan view of the holding portion of the gas generator according to a variation based on the present embodiment, and Fig. 9B is a bottom view of the igniter. A construction of the gas generator according to the variation based on the present embodiment will now be described with reference to these Figs. 9A and 9B.

As shown in Figs. 9A and 9B, the gas generator according to the present variation is different from gas generator 1 B in the present embodiment described above in a position where a flat surface serving as the first rotation prevention mechanism provided in holding portion 30 is provided. Specifically, in the gas generator according to the present variation, a part of a circumferential surface of a portion located at a lowermost end of lower cover 44 of igniter 40 is formed from a flat surface 44d2, and a part of the inner circumferential surface of coupling portion 33 of holding portion 30 is formed from a flat surface 33d in a shape corresponding to flat surface 44d2. Namely, flat surface 33d provided in coupling portion 33 corresponds to the first rotation prevention mechanism.

In the case of such a construction as well, by inserting igniter 40 in holding portion 30 such that flat surface 44d2 provided in igniter 40 and flat surface 33d provided in holding portion 30 meet each other, positioning of igniter 40 with respect to holding portion 30 can readily be achieved and igniter 40 can be prevented from rotating relative to holding portion 30 after assembly.

### (Embodiment 3)

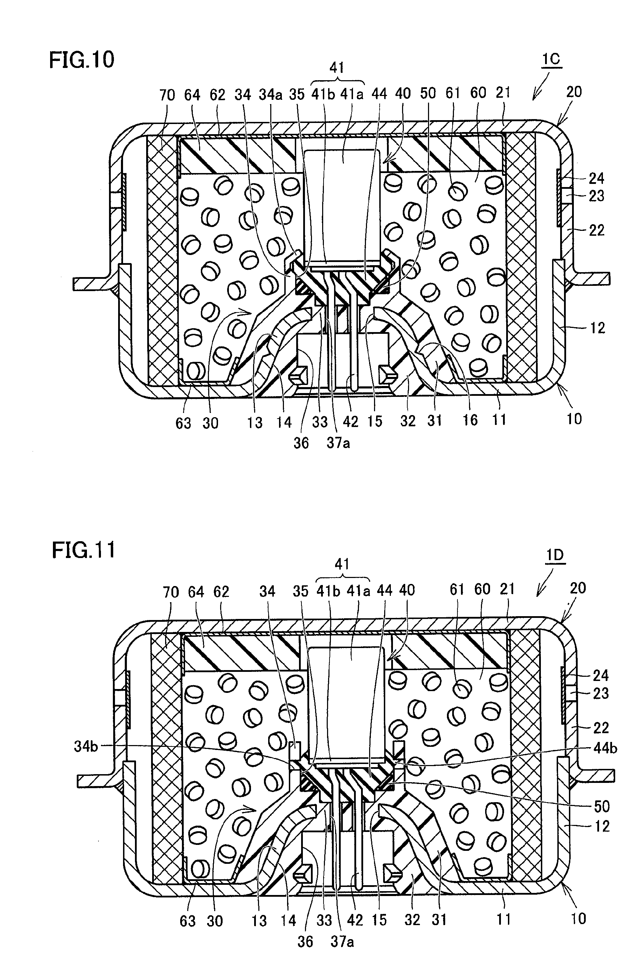

Fig. 10 is a schematic diagram of a gas generator in Embodiment 3 of the present invention. A construction of a gas generator 1C in the present embodiment will be described below with reference to this Fig. 10.

As shown in Fig. 10, gas generator 1C in the present embodiment is different from gas generator 1 A in Embodiment 1 of the present invention described above in a surface shape of protruding cylindrical portion 13 provided in lower shell 10. Specifically, in gas generator 1C in the present embodiment, a plurality of recess portions 16 are provided in a surface of protruding cylindrical portion 13 located on the side of combustion chamber 60.

The plurality of recess portions 16 are in a shape not continuously going around protruding cylindrical portion 13 at least along the circumferential direction (that is, a shape which is not an annular groove), and they are formed, for example, by being formed simultaneously with press-working of lower shell 10 or by providing impressions in the surface after press-working. In addition, the plurality of recess portions 16 provided in lower shell 10 are buried in inner coating portion 31 of holding portion 30 which is the resin-molded portion, and securing to lower shell 10 is achieved also in that portion.

With the construction as such, since a margin for securing between lower shell 10 and holding portion 30 can further be made greater, force of securing holding portion 30 to lower shell 10 improves, so that occurrence of peel-off at the interface portion between lower shell 10 and holding portion 30 can be prevented. In addition, even when force of securing holding portion 30 to lower shell 10 decreases, the plurality of recess portions 16 provided in lower shell 10 also function as a second rotation prevention mechanism preventing holding portion 30 from rotating relative to lower shell 10.

Though a case where a plurality of recess portions 16 are provided in a surface of protruding cylindrical portion 13 located on the side of combustion chamber 60 (that is, a surface coated with inner coating portion 31) has been exemplified above, a plurality of recess portions 16 may be provided in a surface of protruding cylindrical portion 13 located on an outer side (that is, a surface coated with outer coating portion 32), the number of recess portions 16 may be one, or in addition, the same effect can be obtained also by providing a through hole or a projection portion in protruding cylindrical portion 13 instead of a recess portion.

### (Embodiment 4)

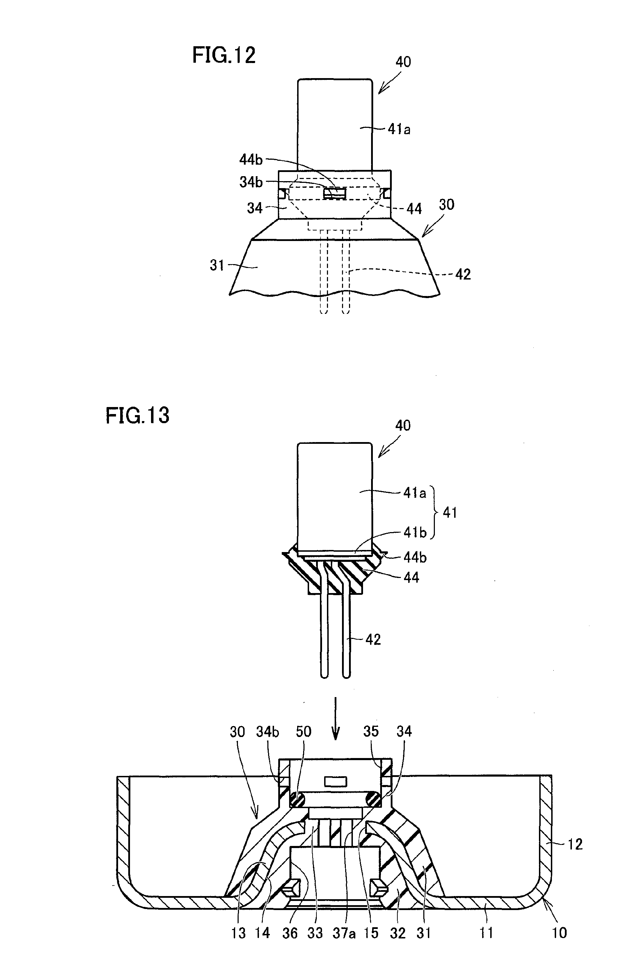

Fig. 11 is a schematic diagram of a gas generator in Embodiment 4 of the present invention. Fig. 12 is a schematic diagram of an area in the vicinity of the igniter of the gas generator in the present embodiment. In addition, Fig. 13 is a schematic diagram for illustrating a structure for assembly and a procedure for assembly of the igniter of the gas generator in the present embodiment. A structure for assembly, a procedure for assembly, and the like of igniter 40 of a gas generator 1 D in the present embodiment will be described below with reference to these Figs. 11 to 13.

As shown in Figs. 11 to 13, gas generator 1D in the present embodiment is common to gas generator 1A in Embodiment 1 of the present invention described above in that lower cover 44 which is a part of igniter 40 is held by holding portion 30 while it is fitted in accommodation recess portion 35 provided in holding portion 30, however, it is different from gas generator 1A in Embodiment 1 of the present invention described above in a specific structure of holding portion 30 and igniter 40.

More specifically, as shown in Figs. 11 to 13, holding wall portion 34 having an annular shape defining accommodation recess portion 35 of holding portion 30 has a plurality of locking hole portions 34b provided to align along a circumferential direction at positions intermediate in a vertical direction. The plurality of locking hole portions 34b are sites corresponding to the locked portion for fixing igniter 40 to holding portion 30, which are integrally provided simultaneously with other sites of holding portion 30 at the time of injection molding of holding portion 30. It is noted that holding wall portion 34 itself is elastically deformable.

On the other hand, lower cover 44 of igniter 40 has a plurality of locking protruding portions 44b provided to protrude outward in a circumferential surface at a site of which outer shape is formed to be greater than agent loaded portion 41 (that is, a site extending radially outward), and the plurality of locking protruding portions 44b correspond to the locking portion for fixing igniter 40 to holding portion 30. The plurality of locking protruding portions 44b are provided to align along the circumferential direction in correspondence with locking hole portions 34b provided in holding portion 30.

During assembly, as shown in Fig. 13, while holding portion 30 formed from the resin-molded portion is formed in advance by injection molding in bottom plate portion 11 of lower shell 10 and sealing member 50 is accommodated within accommodation recess portion 35 of holding portion 30, igniter 40 is inserted in accommodation recess portion 35 from above (that is, the side of top plate portion 21 after assembly). Here, a pair of terminal pins 42 of igniter 40 is inserted in a pair of insertion holes 37a provided in coupling portion 33 of holding portion 30.

Here, locking protruding portions 44b of igniter 40 come in contact with holding wall portion 34 of holding portion 30. As described above, however, since holding wall portion 34 is elastically deformable, holding wall portion 34 retracts radially outward, so that lower cover 44 of igniter 40 can be inserted in accommodation recess portion 35.

Then, after igniter 40 is inserted in holding portion 30, locking protruding portions 44b are fitted in locking hole portions 34b so that holding wall portion 34 returns to its original shape and locking protruding portions 44b are locked to locking hole portions 34b. Thus, igniter 40 is fitted in accommodation recess portion 35 while lower cover 44 thereof is accommodated in accommodation recess portion 35 of holding portion 30, and thus igniter 40 is held by holding portion 30.

In the case of gas generator 1D in the present embodiment described above as well, an effect the same as in the case of gas generator 1A in Embodiment 1 of the present invention described above can be obtained. Namely, igniter 40 which is a part in which an ignition agent or the like sensitively reactive to static electricity, flame, or the like is loaded is not exposed to a high-temperature and high-pressure environment during assembly and safety during the assembly operations can be ensured. In addition, since assembly of igniter 40 to holding portion 30 can be realized through an operation only for inserting igniter 40 in holding portion 30, a gas generator can very readily be manufactured.

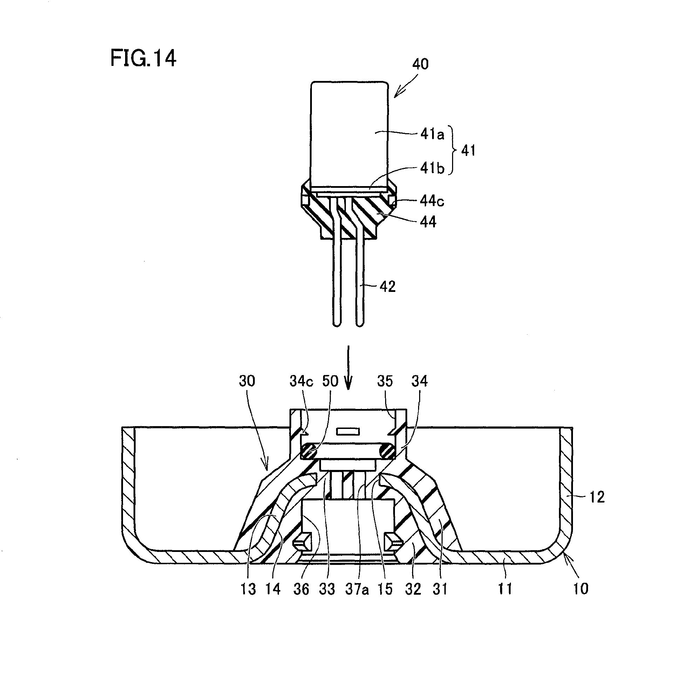

Fig. 14 is a schematic diagram for illustrating a structure for assembly and a procedure for assembly of the igniter of the gas generator according to a variation based on the present embodiment. A structure for assembly and a procedure for assembly of the igniter of the gas generator according to the variation based on the present embodiment will now be described with reference to this Fig. 14.

As shown in Fig. 14, the gas generator according to the present variation is different from gas generator 1D in the present embodiment described above in a specific structure of holding portion 30 and igniter 40.

More specifically, as shown in Fig. 14, holding wall portion 34 having an annular shape defining accommodation recess portion 35 of holding portion 30 has a plurality of locking protruding portions 34c provided on an inner circumferential surface to align along a circumferential direction at a position intermediate in a vertical direction. The plurality of locking protruding portions 34c are sites corresponding to the locking portion for fixing igniter 40 to holding portion 30, which are integrally provided simultaneously with other sites of holding portion 30 at the time of injection molding of holding portion 30. Therefore, the plurality of locking protruding portions 34c are each elastically deformable, and in addition, holding wall portion 34 itself is elastically deformable.

On the other hand, lower cover 44 of igniter 40 has a plurality of locking recess portions 44c in a circumferential surface at a site of which outer shape is formed to be greater than agent loaded portion 41 (that is, a site extending radially outward), and the plurality of locking recess portions 44c correspond to the locked portion for fixing igniter 40 to holding portion 30. The plurality of locking recess portions 44c are provided to align along the circumferential direction in correspondence with locking protruding portions 34c provided in holding portion 30.

During assembly, as shown in Fig. 14, while holding portion 30 formed from the resin-molded portion is formed in advance by injection molding in bottom plate portion 11 of lower shell 10 and sealing member 50 is accommodated within accommodation recess portion 35 of holding portion 30, igniter 40 is inserted in accommodation recess portion 35 from above (that is, the side of top plate portion 21 after assembly). Here, a pair of terminal pins 42 of igniter 40 is inserted in a pair of insertion holes 37a provided in coupling portion 33 of holding portion 30.

Here, locking protruding portions 34c of holding portion 30 come in contact with the inclined lower surface of lower cover 44 of igniter 40. As described above, however, since locking protruding portions 34c and holding wall portion 34 are elastically deformable, locking protruding portions 34c and holding wall portion 34 retract radially outward, so that lower cover 44 of igniter 40 can be inserted in accommodation recess portion 35.

Then, after igniter 40 is inserted in holding portion 30, locking protruding portions 34c are fitted in locking recess portions 44c so that locking protruding portions 34c and holding wall portion 34 return to their original shapes and locking protruding portions 34c are locked to locking recess portions 44c. Thus, igniter 40 is fitted in accommodation recess portion 35 while lower cover 44 thereof is accommodated in accommodation recess portion 35 of holding portion 30, and thus igniter 40 is held by holding portion 30.

Therefore, in the case of such a construction as well, an effect the same as in the case of gas generator 1 D in the present embodiment described above can be obtained.

### (Embodiment 5)

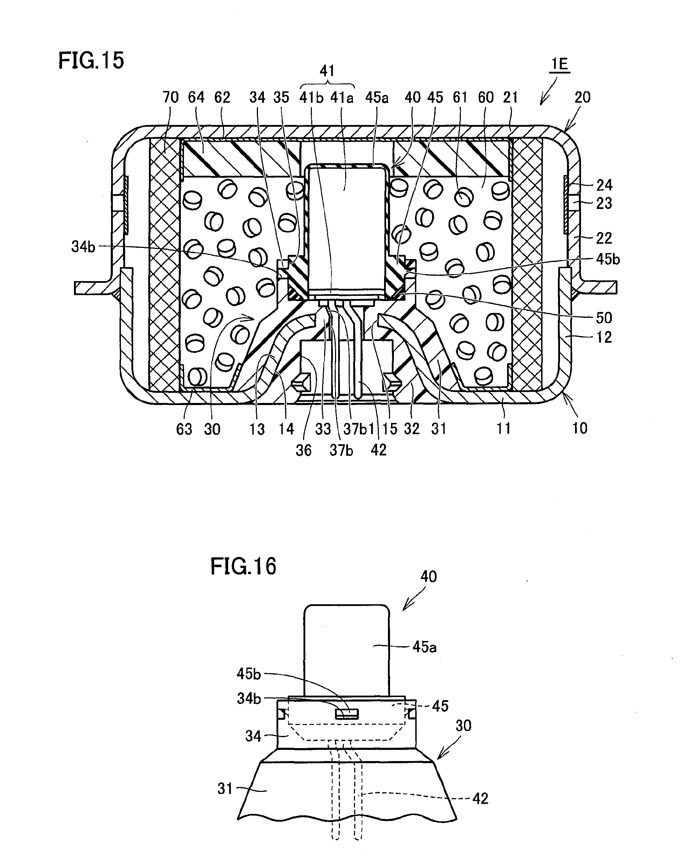

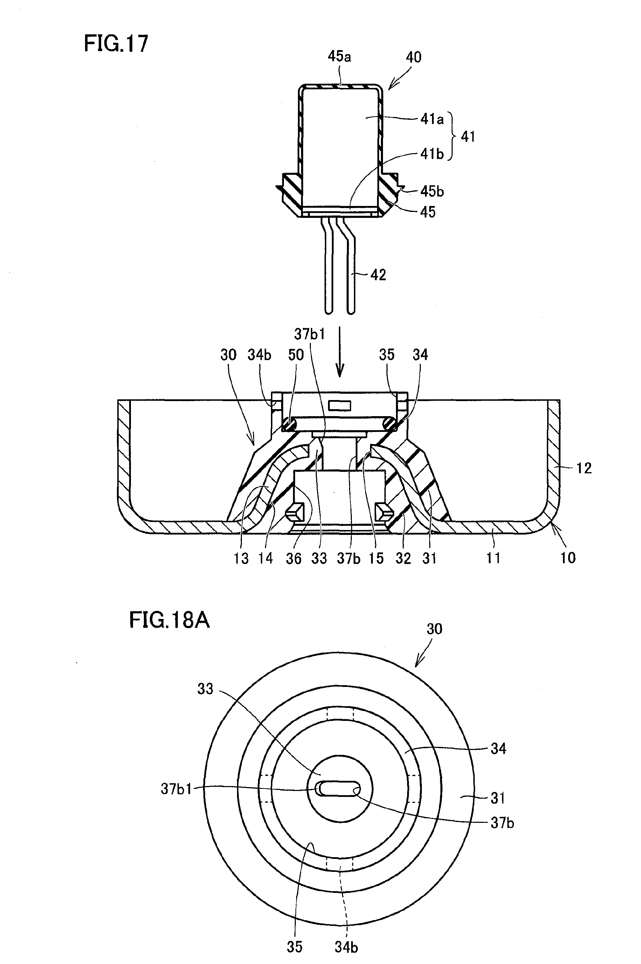

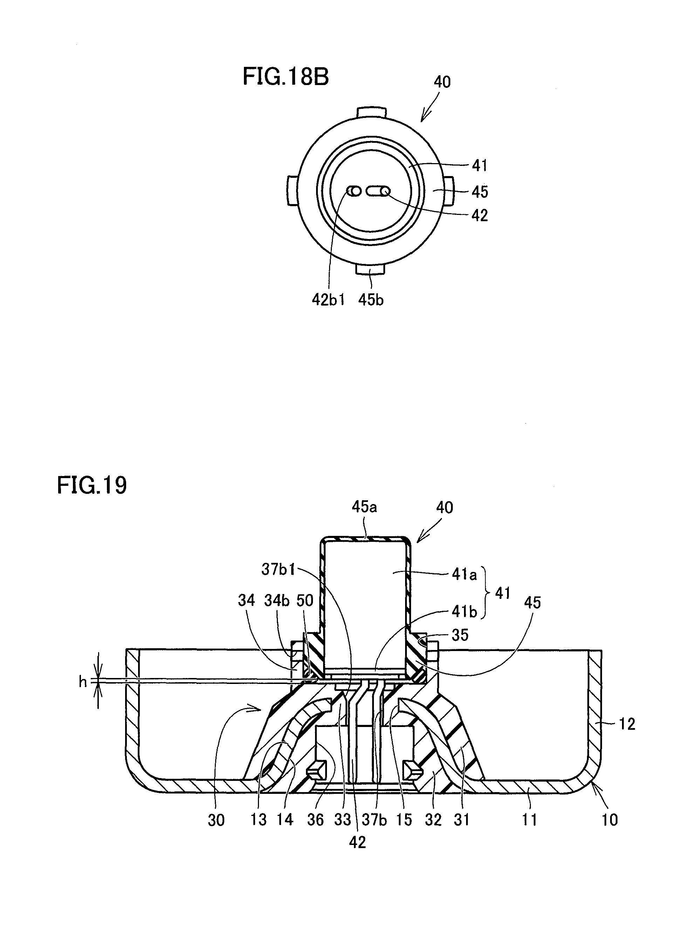

Fig. 15 is a schematic diagram of a gas generator in Embodiment 5 of the present invention. Fig. 16 is a schematic diagram of an area in the vicinity of the igniter of the gas generator in the present embodiment. Fig. 17 is a schematic diagram for illustrating a structure for assembly and a procedure for assembly of the igniter of the gas generator in the present embodiment. In addition, Fig. 18A is a plan view of the holding portion of the gas generator in the present embodiment, and Fig. 18B is a bottom view of the igniter. A structure for assembly, a procedure for assembly, and the like of igniter 40 of a gas generator 1E in the present embodiment will be described below with reference to these Figs. 15 to 17 and Figs. 18A and 18B.

As shown in Figs. 15 to 17 and Figs. 18A and 18B, gas generator 1E in the present embodiment is different from gas generator 1D in Embodiment 4 of the present invention described above in a shape of a cover which is a part of igniter 40. Specifically, in gas generator 1E in the present embodiment, an upper cover 45 of igniter 40 is not in a shape covering a part of terminal pin 42 and base portion 41 b of agent loaded portion 41, but in a shape covering igniter cup 41a of agent loaded portion 41.

More specifically, upper cover 45 has a cup-shaped cap portion 45a having an opening at a lower end, which covers a circumferential surface and an upper surface of igniter cup 41 a, and includes at its lower end, a site in an annular shape of which outer shape is formed to significantly be greater than agent loaded portion 41 (that is, a site extending radially outward). A plurality of locking protruding portions 45b protruding outward are provided in the circumferential surface of the site, and the plurality of locking protruding portions 45b correspond to the locking portion for fixing igniter 40 to holding portion 30. The plurality of locking protruding portions 45b are provided to align along the circumferential direction in correspondence with locking hole portions 34b provided in holding portion 30.

During assembly, as shown in Fig. 17, while holding portion 30 formed from the resin-molded portion is formed in advance by injection molding in bottom plate portion 11 of lower shell 10, upper cover 45 is attached in advance to agent loaded portion 41 to construct igniter 40, and sealing member 50 is accommodated within accommodation recess portion 35 of holding portion 30, igniter 40 is inserted in accommodation recess portion 35 from above (that is, the side of top plate portion 21 after assembly). Here, a pair of terminal pins 42 of igniter 40 is inserted in a pair of insertion holes 37b provided in coupling portion 33 of holding portion 30.

Here, locking protruding portions 45b provided in upper cover 45 of igniter 40 come in contact with holding wall portion 34 of holding portion 30. Holding wall portion 34, however, is elastically deformable, and therefore holding wall portion 34 retracts radially outward, so that upper cover 45 of igniter 40 can be inserted in accommodation recess portion 35.

Then, after igniter 40 is inserted in holding portion 30, locking protruding portions 45b are fitted in locking hole portions 34b so that holding wall portion 34 returns to its original shape and locking protruding portions 45b are locked to locking hole portions 34b. Thus, igniter 40 is fitted in accommodation recess portion 35 while upper cover 45 thereof is accommodated in accommodation recess portion 35 of holding portion 30, and thus igniter 40 is held by holding portion 30. It is noted that, prior to attaching upper cover 45 to agent loaded portion 41, igniter 40 may be inserted in accommodation recess portion 35 of holding portion 30 and thereafter upper cover 45 may be attached to holding portion 30, to thereby simultaneously attach upper cover 45 to agent loaded portion 41.

In the case of gas generator 1E in the present embodiment described above as well, an effect the same as in the case of gas generator 1D in Embodiment 4 of the present invention described above can be obtained. Namely, igniter 40 which is a part in which an ignition agent or the like sensitively reactive to static electricity, flame, or the like is loaded is not exposed to a high-temperature and high-pressure environment during assembly and safety during the assembly operations can be ensured. In addition, since assembly of igniter 40 to holding portion 30 can be realized through an operation only for inserting igniter 40 in holding portion 30, a gas generator can very readily be manufactured.

It is noted that gas generator 1E in the present embodiment is constructed such that base portion 41b of igniter 40 is not covered with upper cover 45. Therefore, a flexion portion provided at an end portion of terminal pin 42 on the side of base portion 41b (that is, a root portion) is exposed in a state before assembly to holding portion 30.

Then, in gas generator 1E in the present embodiment, as shown in Figs. 18A and 18B, in order to conform to a shape of a jutting portion 42b1 of terminal pin 42, insertion hole 37b provided in coupling portion 33 of holding portion 30 is formed from an oblong shaped hole asymmetric when viewed two-dimensionally, where a retracting surface 37b1 is formed.

Specifically, as insertion hole 37b provided in holding portion 30 is provided with retracting surface 37b1 described above, a site allowing reception of jutting portion 42b1 which is a flexion portion of terminal pin 42 is provided in a portion facing accommodation recess portion 35 and the site is provided only at a prescribed position in a circumferential direction around a central axis of insertion hole 37b1.

Here, during assembly, in a case where an orientation of igniter 40 matches with an orientation of insertion hole 37b1 provided in holding portion 30, igniter 40 can smoothly be inserted into a position where a bottom surface of base portion 41b of igniter 40 comes in contact with a bottom surface of accommodation recess portion 35, so that locking of locking protruding portions 45b described above to locking hole portions 34b can be achieved and thus igniter 40 is held by holding portion 30.

On the other hand, Fig. 19 is a diagram showing a state in a case where the igniter has been inserted in an incorrect orientation in the gas generator in the present embodiment. As shown in Fig. 19 during assembly, in a case where an orientation of igniter 40 does not match with an orientation of insertion hole 37b1 provided in holding portion 30, jutting portion 42b1 of terminal pin 42 comes in contact with and interferes with the bottom surface of accommodation recess portion 35 and further insertion becomes impossible. Then, base portion 41 of igniter 40 floats above the bottom surface of accommodation recess portion 35 by a shown height h, which leads to failure of locking protruding portions 45b described above in reaching locking hole portions 34 and failure in fixing of igniter 40 to holding portion 30.

Therefore, with the construction as above, occurrence of a defective condition due to insertion of igniter 40 in an incorrect orientation during assembly can be prevented.

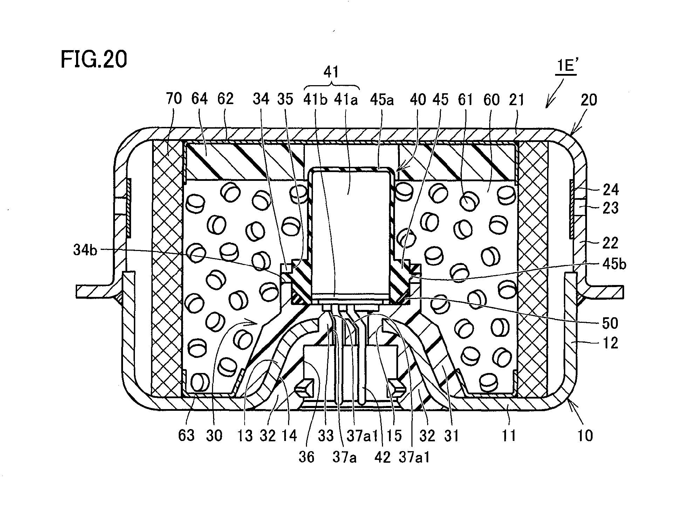

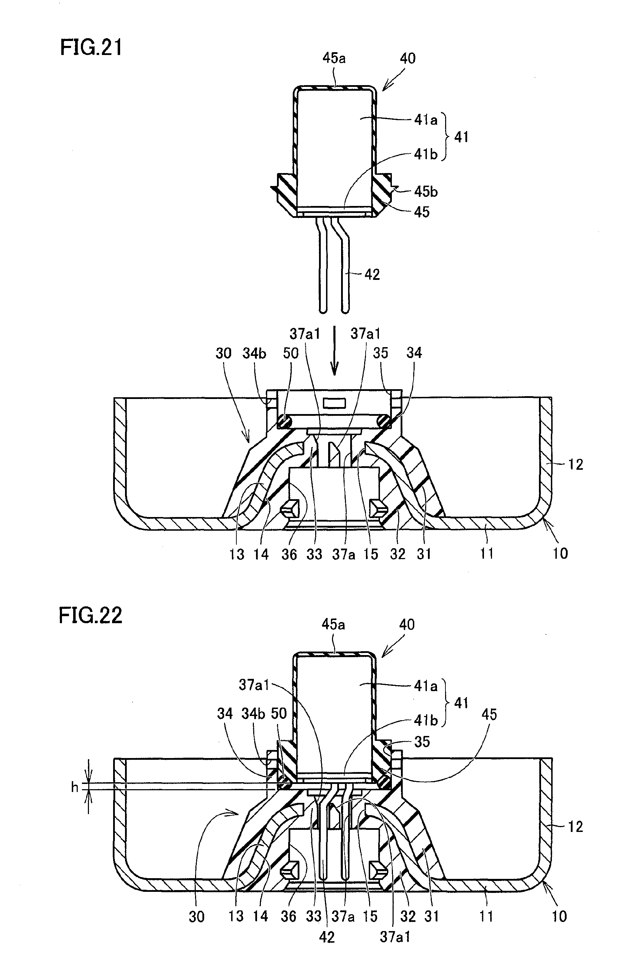

Fig. 20 is a schematic diagram of a gas generator according to a first variation based on the present embodiment, and Fig. 21 is a schematic diagram for illustrating a structure for assembly and a procedure for assembly of the igniter of the gas generator according to the first variation. A structure for assembly, a procedure for assembly, and the like of the gas generator according to the first variation based on the present embodiment will now be described with reference to these Figs. 20 and 21.

As shown in Figs. 20 and 21, a gas generator 1E' according to the present first variation is different from gas generator 1E in the present embodiment described above in a specific structure of holding portion 30. More specifically, in gas generator 1E in the present embodiment described above, insertion hole 37b provided in coupling portion 33 of holding portion 30 has been formed from a single hole in a substantially oblong shape when viewed two-dimensionally in correspondence with a pair of terminal pins 42 of igniter 40, whereas in gas generator 1E' according to the present first variation, insertion hole 37a is formed from a pair of holes in a substantially perfect circle shape when viewed two-dimensionally in correspondence with the pair of terminal pins 42 of igniter 40.

Here, in order to conform to a shape of a jutting portion of terminal pin 42, each of the pair of insertion holes 37a is provided with a retracting surface 37a1, so that a site allowing reception of the jutting portion which is a flexion portion of terminal pin 42 is provided in a portion facing accommodation recess portion 35 and the site is provided only at a prescribed position in a circumferential direction around a central axis of each insertion hole 37a1.

Here, during assembly, in a case where an orientation of igniter 40 matches with an orientation of insertion hole 37a1 provided in holding portion 30, igniter 40 can smoothly be inserted into a position where a bottom surface of base portion 41b of igniter 40 comes in contact with a bottom surface of accommodation recess portion 35, so that locking of locking protruding portions 45b described above to locking hole portions 34b can be achieved and thus igniter 40 is held by holding portion 30.

On the other hand, Fig. 22 is a diagram showing a state in a case where the igniter has been inserted in an incorrect orientation in the gas generator according to the first variation based on the present embodiment. As shown in Fig. 22, during assembly, in a case where an orientation of igniter 40 does not match with an orientation of insertion hole 37a1 provided in holding portion 30, both or one of the jutting portions of the pair of terminal pins 42 come(s) in contact with and interfere(s) with the bottom surface of accommodation recess portion 35 and further insertion becomes impossible. Then, base portion 41 of igniter 40 floats above the bottom surface of accommodation recess portion 35 by shown height h, which leads to failure of locking protruding portions 45b described above in reaching locking hole portions 34b and failure in fixing of igniter 40 to holding portion 30.

Therefore, with such a construction as well, occurrence of a defective condition due to insertion of igniter 40 in an incorrect orientation during assembly can be prevented.

It is noted that, in the case of the construction as in the present first variation, since a part of coupling portion 33 of holding portion 30 formed from the resin-molded portion is located at a portion of igniter 40 located between the pair of terminal pins 42, a fluid resin material flows well while holding portion 30 is formed by injection molding and high moldability can also be ensured.

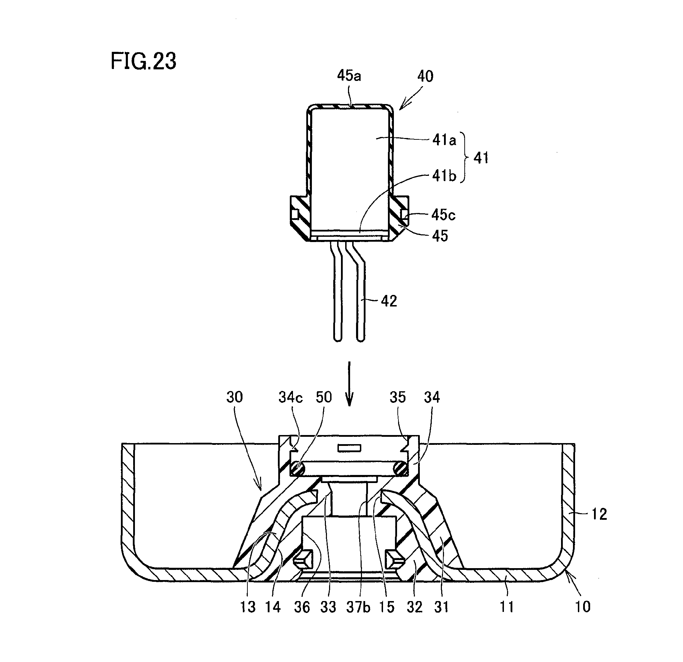

Fig. 23 is a schematic diagram for illustrating a structure for assembly and a procedure for assembly of the igniter of a gas generator according to a second variation based on the present embodiment. A structure for assembly and a procedure for assembly of the igniter of the gas generator according to the second variation based on the present embodiment will now be described with reference to this Fig. 23.

As shown in Fig. 23, the gas generator according to the present second variation is different from gas generator 1E in the present embodiment described above in a specific structure of holding portion 30 and igniter 40.

More specifically, as shown in Fig. 23, holding wall portion 34 having an annular shape defining accommodation recess portion 35 of holding portion 30 has a plurality of locking protruding portions 34c provided on an inner circumferential surface to align along a circumferential direction at a position intermediate in a vertical direction. The plurality of locking protruding portions 34c are sites corresponding to the locking portion for fixing igniter 40 to holding portion 30, which are integrally provided simultaneously with other sites of holding portion 30 at the time of injection molding of holding portion 30. Therefore, the plurality of locking protruding portions 34c are all elastically deformable and holding wall portion 34 itself is elastically deformable.

On the other hand, upper cover 45 of igniter 40 has a plurality of locking recess portions 45c in a circumferential surface at a site in an annular shape of which outer shape is formed to be significantly greater than agent loaded portion 41 (that is, a site extending radially outward), and the plurality of locking recess portions 45c correspond to the locked portion for fixing igniter 40 to holding portion 30. The plurality of locking recess portions 45c are provided to align along the circumferential direction in correspondence with locking protruding portions 34c provided in holding portion 30.

During assembly, as shown in Fig. 23, while holding portion 30 formed from the resin-molded portion is formed in advance by injection molding in bottom plate portion 11 of lower shell 10, upper cover 45 is attached in advance to agent loaded portion 41 to construct igniter 40, and sealing member 50 is accommodated within accommodation recess portion 35 of holding portion 30, igniter 40 is inserted in accommodation recess portion 35 from above (that is, the side of top plate portion 21 after assembly). Here, a pair of terminal pins 42 of igniter 40 is inserted in a pair of insertion holes 37a provided in coupling portion 33 of holding portion 30.

Here, locking protruding portions 34c of holding portion 30 come in contact with the inclined lower surface of upper cover 45 of igniter 40. As described above, however, since locking protruding portions 34c and holding wall portion 34 are elastically deformable, locking protruding portions 34c and holding wall portion 34 retract radially outward, so that upper cover 45 of igniter 40 can be inserted in accommodation recess portion 35.

Then, after igniter 40 is inserted in holding portion 30, locking protruding portions 34c are fitted in locking recess portions 45c so that locking protruding portions 34c and holding wall portion 34 return to their original shapes and locking protruding portions 34c are locked to locking recess portions 45c. Thus, igniter 40 is fitted in accommodation recess portion 35 while upper cover 45 thereof is accommodated in accommodation recess portion 35 of holding portion 30, and thus igniter 40 is held by holding portion 30. It is noted that, prior to attaching upper cover 45 to agent loaded portion 41, igniter 40 may be inserted in accommodation recess portion 35 of holding portion 30 and thereafter upper cover 45 may be attached to holding portion 30, to thereby simultaneously attach upper cover 45 to agent loaded portion 41.

Therefore, in the case of such a construction as well, an effect the same as in the case of gas generator 1E in the present embodiment described above can be obtained.

### (Embodiment 6)

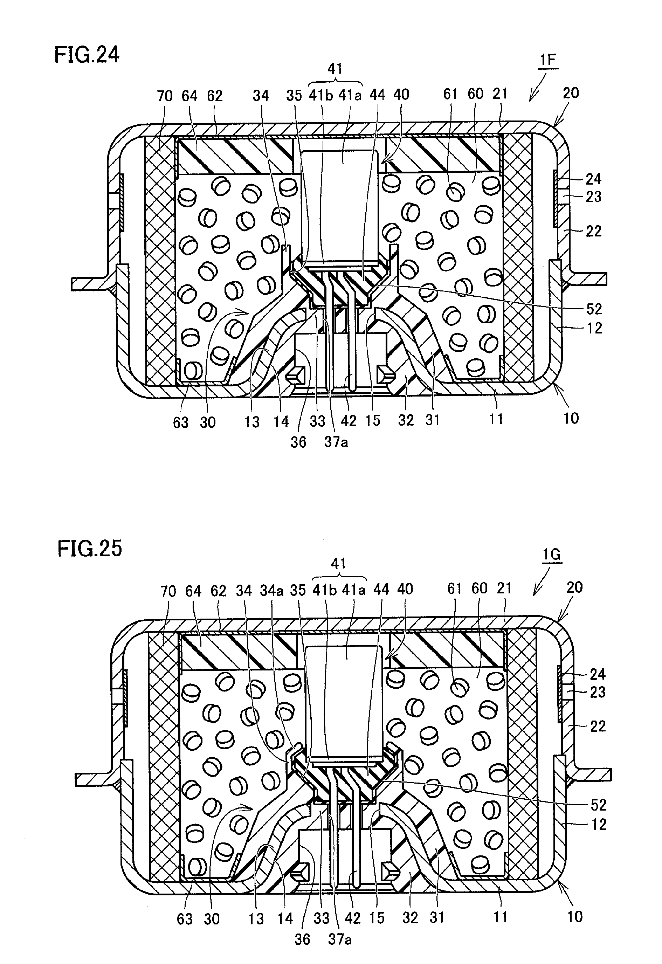

Fig. 24 is a schematic diagram of a gas generator in Embodiment 6 of the present invention. A structure for assembly, a procedure for assembly, and the like of igniter 40 of a gas generator IF in the present embodiment will be described below with reference to this Fig. 24.

As shown in Fig. 24, gas generator IF in the present embodiment is common to gas generator 1A in Embodiment 1 of the present invention described above in that lower cover 44 which is a part of igniter 40 is held by holding portion 30 while it is fitted in accommodation recess portion 35 provided in holding portion 30. Gas generator IF, however, is different from gas generator 1A in Embodiment 1 of the present invention described above in a specific structure of holding portion 30 and igniter 40 or a specific structure for holding portion 30 to hold igniter 40.

More specifically, as shown in Fig. 24, in gas generator IF in the present embodiment, a locking mechanism is not provided in holding portion 30 and igniter 40, but instead an adhesive is applied between a surface of accommodation recess portion 35 of holding portion 30 and a surface of lower cover 44 of igniter 40 opposed thereto, so that holding portion 30 holds igniter 40 by means of an adhesive layer 52 formed by curing of the adhesive. Here, if an adhesive poor in hygroscopicity is employed as the adhesive, adhesive layer 52 itself formed as a result of curing of the adhesive functions as a sealing member. Therefore, by filling a gap between lower cover 44 of igniter 40 and accommodation recess portion 35 of holding portion 30 with adhesive layer 52, it is not necessary to interpose a sealing member formed from a separate member such as an O ring, which also contributes to reduction in the number of parts.

For the adhesive above, an adhesive containing a resin material excellent in heat resistance, durability, corrosion resistance, and the like after curing is suitably selected and made use of, and for example, a cyanoacrylate-based resin or a silicone-based resin is particularly suitably made use of as the resin material. In addition, for the resin material, other than the resin materials described above, a phenol-based resin, an epoxy-based resin, a melamine-based resin, a urea-based resin, a polyester-based resin, an alkyd-based resin, a polyurethane-based resin, a polyimide-based resin, a polyethylene-based resin, a polypropylene-based resin, a polyvinyl chloride-based resin, a polystyrene-based resin, a polyvinyl acetate-based resin, a polytetrafluoroethylene-based resin, an acrylonitrile butadiene styrene-based resin, an acrylonitrile styrene-based resin, an acryl-based resin, a polyamide-based resin, a polyacetal-based resin, a polycarbonate-based resin, a polyphenylene ether-based resin, a polybutylene terephthalate-based resin, a polyethylene terephthalate-based resin, a polyolefin-based resin, a polyphenylene sulfide-based resin, a polysulfone-based resin, a polyether sulfone-based resin, a polyarylate-based resin, a polyether ether ketone-based resin, a polyamide imide-based resin, a liquid crystal polymer, and the like can be made use of.

During assembly, while holding portion 30 formed from the resin-molded portion is formed in advance by injection molding in bottom plate portion 11 of lower shell 10 and an adhesive is applied to the surface of accommodation recess portion 35 of holding portion 30, igniter 40 is inserted in accommodation recess portion 35 from above (that is, the side of top plate portion 21 after assembly). Here, a pair of terminal pins 42 of igniter 40 is inserted in a pair of insertion holes 37a provided in coupling portion 33 of holding portion 30.

Thus, igniter 40 is fitted in accommodation recess portion 35 while lower cover 44 thereof is accommodated in accommodation recess portion 35 of holding portion 30. As the adhesive is cured, holding portion 30 holds igniter 40. It is noted that the adhesive may be applied to lower cover 44 of igniter 40.

In the case of gas generator IF in the present embodiment described above as well, an effect the same as in the case of gas generator 1A in Embodiment 1 of the present invention described above can be obtained. Namely, igniter 40 which is a part in which an ignition agent or the like sensitively reactive to static electricity, flame, or the like is loaded is not exposed to a high-temperature and high-pressure environment during assembly and safety during the assembly operations can be ensured. In addition, since assembly of igniter 40 to holding portion 30 can be realized through an operation only for inserting igniter 40 in holding portion 30, a gas generator can very readily be manufactured.

### (Embodiment 7)

Fig. 25 is a schematic diagram of a gas generator in Embodiment 7 of the present invention. A structure for assembly, a procedure for assembly, and the like of igniter 40 of a gas generator 1 G in the present embodiment will be described below with reference to this Fig. 25.

As shown in Fig. 25, gas generator 1G in the present embodiment is combination of a structure for locking igniter 40 to holding portion 30 which has been adopted in gas generator 1A in Embodiment 1 of the present invention described above with a structure for holding portion 30 to hold igniter 40 which has been adopted in gas generator IF in Embodiment 6 of the present invention described above.

Namely, in gas generator 1 G in the present embodiment, locking pawl portion 34a is provided at a tip end of holding wall portion 34, so that lower cover 44 of igniter 40 is locked by locking pawl portion 34a after assembly. In addition, an adhesive is applied between a surface of accommodation recess portion 35 of holding portion 30 and a surface of lower cover 44 of igniter 40 opposed thereto, so that holding portion 30 holds igniter 40 after assembly by means of adhesive layer 52 formed by curing of the adhesive.

In the case of gas generator 1 G in the present embodiment described above as well, an effect the same as in the case of gas generator 1A in Embodiment 1 of the present invention described above can be obtained. Namely, igniter 40 which is a part in which an ignition agent or the like sensitively reactive to static electricity, flame, or the like is loaded is not exposed to a high-temperature and high-pressure environment during assembly and safety during the assembly operations can be ensured. In addition, since assembly of igniter 40 to holding portion 30 can be realized through an operation only for inserting igniter 40 in holding portion 30, a gas generator can very readily be manufactured. Moreover, in the case of gas generator 1G in the present embodiment, as in the case of gas generator 1F in Embodiment 6 of the present invention described above, it is not necessary to interpose a sealing member formed from a separate member such as an O ring between igniter 40 and holding portion 30, and therefore an effect that the number of parts can be reduced is also obtained.

### (Embodiment 8)

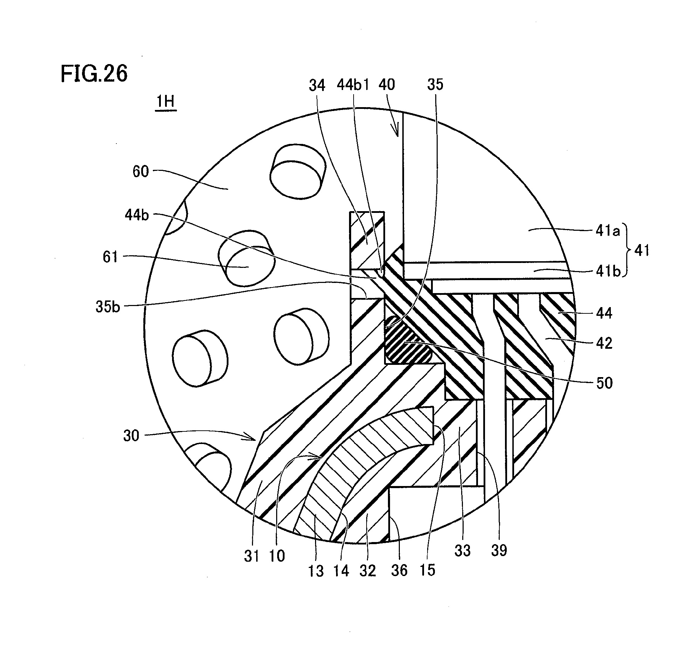

Fig. 26 is an enlarged view of a main portion of a gas generator in Embodiment 8 of the present invention. A gas generator 1H in the present embodiment will be described below with reference to this Fig. 26.

As shown in Fig. 26, gas generator 1 H in the present embodiment is different from gas generator 1D in Embodiment 4 of the present invention described above in a specific shape of locking protruding portion 44b serving as the locking portion.

More specifically, each of a plurality of locking protruding portions 44b provided in lower cover 44 of igniter 40 has a groove portion 44b1 extending in a circumferential direction, in a portion in a main surface on a side to be locked to locking hole portion 34b serving as the locked portion (that is, the upper surface of locking protruding portion 44b in the figure) in correspondence with a root of locking protruding portion 44b.

Groove portion 44b1 is provided such that locking protruding portion 44b is more readily elastically deformable at the time of contact of locking protruding portion 44b with holding wall portion 34 during assembly, and provided to prevent plastic deformation of locking protruding portion 44b during assembly.

In the case of gas generator 1H in the present embodiment described above as well, an effect the same as in the case of gas generator 1D in Embodiment 4 of the present invention described above can be obtained.

In addition, by adopting the construction above, the root portion of locking protruding portion 44b is greatly bent at the time of assembly of igniter 40, so that locking protruding portion 44b readily elastically deforms and smooth assembly of igniter 40 to holding portion 30 can be achieved. In addition, concentration of compressive stress at the root portion of locking protruding portion 44b and resultant plastic deformation can be prevented, and stable assembly of igniter 40 to holding portion 30 can be achieved.

Namely, by adopting the construction above, not only assembly operations are facilitated, but also locking protruding portion 44b more readily returns to its original shape after assembly. Therefore, variation in accuracy in position of assembly caused by plastic deformation of locking protruding portion 44b can be suppressed, and such defective conditions as wobbling of igniter 40 after assembly or insufficient assembly strength can effectively be prevented.

In Embodiments 1 to 8 and variations thereof of the present invention described above, a case where a lower shell is formed from a press-formed product formed by press-working one plate-shaped member made of metal has been exemplified, however, limitation thereto is not necessarily intended. A lower shell formed by combination of press-working and another type of working (forging, drawing, cutting, or the like) may be employed, or a lower shell formed only by another type of working may be employed.

In addition, in Embodiments 1 to 8 and variations thereof of the present invention described above, a case where an igniter of a type in which an ignition agent and an enhancer agent are loaded in an agent loaded portion has been employed as the igniter has been exemplified, however, an igniter of a type what is called a squib in which only an ignition agent is loaded in an agent loaded portion may be employed instead.

Moreover, characteristic features of the gas generators according to Embodiments 1 to 8 and variations thereof of the present invention described above can naturally be combined with one another within the scope allowable in light of the gist of the present invention. Furthermore, a specific shape of a protruding cylindrical portion provided in a lower shell described above, a specific shape of a holding portion provided on the lower shell, a shape of an igniter fitted in the holding portion, and the like can also naturally be modified as appropriate.

Thus, each embodiment and a variation thereof above disclosed herein are illustrative and non-restrictive in every respect. The technical scope of the present invention is delimited by the terms of the claims and is intended to include any modifications within the scope and meaning equivalent to the terms of the claims.

### REFERENCE SIGNS LIST

1A to 1H, 1E' gas generator; 10 lower shell; 11 bottom plate portion; 12 circumferential wall portion; 13 protruding cylindrical portion; 14 depression portion; 15 opening; 16 recess portion; 20 upper shell; 21 top plate portion; 22 circumferential wall portion; 23 gas discharge opening; 24 sealing member; 30 holding portion; 31 inner coating portion; 32 outer coating portion; 33 coupling portion; 33d flat surface; 34 holding wall portion; 34a locking pawl portion; 34b locking hole portion; 34c locking protruding portion; 34d flat surface; 35 accommodation recess portion; 36 female connector portion; 37a, 37b, 38 insertion hole; 37a1, 37b1 retracting surface; 40 igniter; 41 agent loaded portion; 41a igniter cup; 41 b base portion; 42 terminal pin; 42b1 jutting portion; 44 lower cover; 44b locking protruding portion; 44b1 groove portion; 44c locking recess portion; 44d1, 44d2 flat surface; 45 upper cover; 45a cap portion; 45b locking protruding portion; 45c locking recess portion; 50 sealing member; 52 adhesive layer; 60 combustion chamber; 61 gas generating agent; 62 upper-side supporting member; 63 lower-side supporting member; 64 cushion material; and 70 filter.

## Claims

1. A gas generator, comprising:
a short cylindrical housing which is constituted of a top plate portion (21) and a bottom plate portion (11) closing axial end portions and a circumferential wall portion (12, 22) provided with a gas discharge opening (23) and includes therein a combustion chamber (60) accommodating a gas generating agent (61);
an igniter (40) for burning said gas generating agent (61); and
a holding portion (30) provided on said bottom plate portion (11), for holding said igniter (40),
said housing at least having a lower shell (10) including said bottom plate portion (11) and an upper shell (20) including said top plate portion (21),
said lower shell including a protruding cylindrical portion (13) provided to protrude toward said top plate portion (21) and an opening (15) provided at an axial end portion of said protruding cylindrical portion (13), which is located on a side of said top plate portion (21),
said holding portion (30) being formed from a resin-molded portion which is formed by attaching a fluid resin material to said bottom plate portion (11) so as to reach a part of an outer surface of said bottom plate portion (11) from a part of an inner surface of said bottom plate portion (11) through said opening (15) and solidifying the fluid resin material so that at least a part of the resin-molded portion is secured to said bottom plate portion (11) and including an accommodation recess portion (35) for accommodating said igniter (40) in a portion opposed to said top plate portion (21), and
said igniter (40) being held by said holding portion (30) while it is inserted in said accommodation recess portion (35) from a side of said top plate portion (21) and fitted in said accommodation recess portion (35).

2. The gas generator according to claim 1, wherein
one of said igniter (40) and said holding portion (30) is provided with a locking portion,
the other of said igniter (40) and said holding portion (30) is provided with a locked portion, and
said igniter (40) is held by said holding portion (30) as said locking portion is locked to said locked portion.

3. The gas generator according to claim 2, wherein
said locking portion has a groove portion extending along a circumferential direction, in a portion on a main surface on a side locked to said locked portion, which corresponds to a root of said locking portion.

4. The gas generator according to claim 1, wherein
said igniter (40) is held by said holding portion (30) by being fixed to said holding portion (30) with an adhesive (52).

5. The gas generator according to claim 1, further comprising a first rotation prevention mechanism for preventing said igniter (40) from rotating relative to said holding portion (30).

6. The gas generator according to claim 1, further comprising a second rotation prevention mechanism for preventing said holding portion (30) from rotating relative to said lower shell (10).

7. The gas generator according to claim 1, wherein
said lower shell is made of a press-formed product formed by press-working one plate-shaped member made of metal.

8. The gas generator according to claim 1, wherein
said igniter (40) includes an agent loaded portion (41a) accommodating an agent for burning said gas generating agent (61) and a terminal pin (42) connected to said agent loaded portion (41a) for igniting said agent, and
said terminal pin (42) is arranged to pass through said opening (15) in said lower shell (10).

9. The gas generator according to claim 8, wherein
said holding portion (30) includes an insertion hole through which said terminal pin (42) is inserted,
said terminal pin (42) has, in a root portion, a flexion portion which is formed such that a part thereof juts out,
said insertion hole has a site allowing reception of said flexion portion of said terminal pin (42), in a portion facing said accommodation recess portion, and
the site allowing reception of said flexion portion is provided only at a prescribed position in a circumferential direction around a central axis of said insertion hole.
